# EUROPEAN PATENT SPECIFICATION

(11) **EP 0 717 261 B1**
(45) Date of publication and mention of the grant of the patent: **08.12.1999**
(21) Application number: 96103325.5
(22) Date of filing: 19.08.1991
(51) Int. Cl.: G01C 15/00, G01S 5/16

(54) **Spatial positioning system**
Räumliche Positionierungsvorrichtung
Système de positionnement dans l'espace

(30) Priority: 17.08.1990 US 570268; 31.12.1990 US 636459
(43) Date of publication of application: 19.06.1996
(62) Divisional of application: 91919739.2
(73) Proprietor: Arc Second, Inc, Sterling, VA 20166 (US)
(72) Inventor: Beliveau, Yvan Joseph, Blacksburg, VA 24060 (US); Lundberg, Eric J., Reston, VA 20194, (US); Pratt, Timothy, Blacksburg, VA 24060 (US); Dornbusch, Andrew W., Blacksburg, VA 24060 (US)
(74) Representative: Walsh, Michael Joseph

(56) References cited:
- FR-A- 2 584 197
- FR-A- 2 640 760
- GB-A- 2 152 320
- GB-A- 2 173 369
- US-A- 4 677 555
- US-A- 4 700 301
- US-A- 4 820 041
- US-A- 4 912 643
- IEEE TRANSACTIONS ON VEHICULAR TECHNOLOGY, vol. 38, no. 3, 1 August 1989, pages 132-139, XP000101473 MCGILLEM C D ET AL: "A BEACON NAVIGATION METHOD FOR AUTONOMOUS VEHICLES"

## Description

### Field of the Invention

The present invention relates to a spatial positioning and measurement system and, more particularly, to a spatial positioning and measurement system for determining the instantaneous x-y-z position of an object in a three-dimensional Cartesian coordinate system, comprising at least one fixed reference station, the or each said reference station emitting at least one primary radiation beam which is rotated about an axis, and the or each said reference station also emitting at least one secondary radiation beam which is rotated in an opposite direction from said primary beam; a portable position sensor located at said object, said sensor including detector means for detecting said primary and secondary beams and emitting a signal each time one of said beams is detected; and determination means for determining the position of the object based on the signals emitted from said detector means. Such a system may provide the three-dimensional position of an object using three or more fixed referent stations systems and one or more portable position sensors, and can provide feedback for adjusting the position of the object.

### Background of the Invention

Triangulation is a well known method of determining position. The basic premise of triangulation is as follows:
given that a triangle has three sides and three interior angles for a total of six items of measurement, when three of these items of measurement are known, the remaining three unknown items of measurement can be resolved.

Resection is also a well known method of determining position. Resection is a special application of the triangulation method of positioning. The basic premise of resection is as follows:
given three points of known position and a point of unknown position; the coordinates of the unknown point can be calculated when the angles between lines linking the three points of known position to the point of unknown position are also known.

A thesis entitled "The Design and Development of a Mobile Robot Location System" by Theodore Scott Rappaport, published in December, 1984, discloses two methods for determining position. The first of Rappaport's methods (Method I) is based on the special application of triangulation called resection. The positioning system utilizes three light beacons located at known positions and a rotating detector head which rotates at a constant angular velocity. The rotating detector head is attached to a mobile robot located in a unknown position. The angles between the lines of the three light beacons and the rotating detector head are determined through time measurements. A computer generates a time measurement each time a photodetector located on the horizontally rotating head detects a light beacon as the photodetector scans a horizontal plane. Time measurements are obtained as each beacon activates the photodetector.

Identifying the individual beacons, which is necessary in order to determine position, is accomplished by modulating one of the beacons differently than the other two beacons. A prototype mobile robot and positioning system was built of the above Method I system. Accuracies of ± l00mm were obtained except in "zones of ambiguity", which were defined as the area where adjacent beacon angles were less than 30 degrees.

The second positioning method disclosed by Rappaport (Method II) is one in which rotating light beacons are fixed in known positions and a portable light-detector is attached to the mobile robot.

Both Method I and Method II as disclosed by Rappaport can work only as an x, y positioning system. Method I utilizes timing of a rotating mechanism on a mobile robot. This rotating mechanism requires a very stable platform which will accommodate the movement of the mobile robot and ensure a horizontal plane, thus limiting the practicality of the system for variable z-axis measurements. Method II suffers from limited z-axis control and did not expressly provide for the synchronization of the time between the fixed stations and the portable station.

In a further paper entitled "A Beacon Navigation Method for Autonomous Vehicles", IEEE Transactions on Vehicular Technology, Vol. 38, No. 3, Aug. 1989, pp. 132-139, Clare D. McGillem and Theodore S. Rappaport describe a further similar experimental system in which a rotational optical receiving system mounted on a vehicle provided angular measurements between infrared beacons, while an on-board computer used the trigonometric solution to the "three point problem" in land surveying to compute and display the x,y location and heading of the vehicle. The heading angle measurement was made by observing the angular difference between one of the beacons, the master beacon, and an on-board beacon fitted at the front of the vehicle.

U.S. Patent No. 4,700,301 to Dyke discloses a method of automatically steering agricultural type vehicles on a predetermined course. In order to accomplish this, Dyke discloses a method of sensing the present position and direction of motion of the vehicle. The present position and direction are then compared to the predetermined course and the steering angle is adjusted to compensate for any differences.

More specifically, Dyke discloses installing a laser emitting a narrow beam of light and an optically aligned directional light detector on a rotating platform on the vehicle. Retroreflectors are placed at reference points around the field in which the vehicle is operating. When the laser light hits the retroreflectors, the reflected light is detected and the computer records counts corresponding to the times of the hits. The position of the vehicle can be determined from these counts.

Alternatively, Dyke discloses that the position of the vehicle can be determined using lasers rotating at a constant angular velocity located at two reference points, and an all directional light with a radio transmitter for transmitting a detect signal to the vehicle located at a third reference point. When the reflected light is detected, the computer records counts corresponding to the times of the hits. The position of the vehicle can be determined from these counts. The method disclosed by Dyke provides only a method for determining position of a vehicle in an x-y plane. There is no provision for determining position in an axis perpendicular to the x-y plane, i.e., the z-axis. Moreover, the method suffers from the disadvantage that it is limited to sites which are relatively planar.

U.S. Patent No. 4,820,041 to Davidson et al. discloses a position sensing system for surveying and grading. The system includes two laser reference stations, each of which emits a laser beam that periodically sweeps across the area to be surveyed. Each time a laser beam strikes the opposite reference station, a radio timing signal is broadcast by that reference station. Thus, each reference station must be connected by a line-of-sight to each other reference station so that all reference stations are on essentially the same elevation. The system also includes a portable sensing station having a laser beam receiver, a radio receiver and a programmed computer. The position of the sensing station in the x-y plane relative to the reference station is computed based on the relative timing of detection of the laser beams and the reception of the radio signals. The position of the sensing station in the z-direction, i.e., elevation, is determined according to the height at which one of the laser beams strikes the laser beam receiver.

The system disclosed by Davidson et al. suffers from several disadvantages. As Davidson et al. themselves acknowledge at column 24 of the patent, three such laser reference stations are required, as a practical matter, in order to improve the area of coverage and accuracy of the system. By using three such laser reference stations in an appropriate layout, the region of measurement ambiguity, which occurs in the area between two reference stations where the interior angles are very small and thus the intersection of the laser beams at the sensing station approaches a straight line, is eliminated. The incorporation of a third reference station is not described, and Davidson et al. does not disclose how this could be done in view of the need to have a line of sight between the reference stations in order to activate the timing datum. Furthermore, Davidson et al. does not disclose how the portable sensing station would identify the incoming laser beams from the individual reference stations, which is necessary in order to calculate position. This identification is a particular problem since a practical system will need a minimum of three laser reference stations, and this third laser beam will add significant identification complexity.

The four-sided linear array detector of the portable sensing station disclosed by Davidson et al. limits the range of vertical positioning to the length of the linear array, without some mechanical method of raising and lowering the four-sided linear array detector along the z-axis. In addition, the electronic circuitry required to manage the information from the four-sided linear array detector is complex. The vertical accuracy achievable in the Davidson et al. system with the four-sided linear array detector is a function of the height of the individual linear array detector elements, which is limited to a minimum height in order to provide sufficient photosensitive surface area to detect the laser beam. The horizontal (x, y) accuracy of the system disclosed by Davidson et al. is limited by the distance of the individual detectors of the four-sided linear array detector to the actual center of the portable sensing station, the position of which is being determined.

Moreover, the system disclosed by Davidson et al. requires alignment of each laser beam into a specific plane containing the laser and the reference photodetector corresponding to that laser. Thus, the measurement accuracy of the system disclosed by Davidson et al. depends, in a large part, on the distance of the portable sensing station from the fixed reference stations. There is no disclosure of how the system could be adapted for use on a large non-planar site (i.e. typical construction site) where more than two laser reference stations would be needed to achieve a useful accuracy over the entire site.

Furthermore, the range in which all coordinates (x, y, z) of the portable sensing station disclosed by Davidson et al. can be determined is limited to the planes where both rotating laser beams will strike the four-sided linear array detector.

GB-A-2 173 369 describes a position determining apparatus for use in land surveying in particular. A single laser beam with a straight line cross-section is caused to rotate with its straight line section at a known non-zero angle to the horizontal. As it rotates, it crosses at least three light detectors spaced in the vertical direction. The extent of the rotation of the beam is indicated by pulses transmitted to the detector station. The time of transit of the beam across the various detectors is also counted by these pulses. By suitable calculation, the distance, elevation and azimuth of the sensors from the source of the beam can be calculated. The system is directed to facilitating the determination of height, distance and angular position of a location with respect to a known reference point using a single instrument rather than several separate instruments. There is no disclosure relating to possible use of the system in any dynamic environment and neither is there any disclosure of possible use of multiple beams.

US Patent No.4,912,643 to Beirne discloses a position sensing apparatus for use in land surveying and earth moving machinery control. The system includes two base stations which are spaced apart by a known distance on a datum line. Each base station has a generator which emits a rotating laser beam. The rotating laser beams are detected by a movable sensor and also by datum sensors, each of which is associated with a respective laser beam generator and is located on the datum line. The time difference between detection of each laser beam by the movable and datum sensors is determined and is used to calculate positional angles between the datum line and positional lines extending from the movable sensor to each base station. The laser beams are differentiated by contra-rotation in the same horizontal plane. Vertical position is determined according to the vertical position on the movable sensor at which the beams are detected. The position and level values may be continuously displayed in a vehicle having a movable sensor and they may be used for automatic control or may be stored for analysis.

The datum sensor dispenses with any need for a reference rotating laser beam, so that only one rotating beam is required at each base station. The level of the ground of the movable sensor is obtained by knowing the vertical position on the movable sensor at which the laser beams are detected. This system suffers however from the same deficiency as that disclosed by Davidson et al, US Patent No. 4,820,041, in that the range of vertical position will be limited by the vertical extent of the sensor. It thus has restricted z-axis capability. The Beirne two-station system will also be subject to the same measurement ambiguity as Davidson when the interior angles are very small and the intersection of the laser beams at the sensing station approaches a straight line. The disclosure of Beirne is limited solely to a two base station arrangement, and there is no suggestion that a third base station might be added. In particular, since differentiation of the rotating radiation beams is effected by contra-rotation, the Beirne system is thus not in any case suited to configurations having more than two base stations.

In summary therefore, the Beirne system is thus also subject to the disadvantages noted in the discussion of both Davidson and also Dyke, US Patent No. 4,700,301, in that it must inevitably be limited to sites which are relatively planar. There is no disclosure of how the Beirne system could be adapted for use on a large non-planar site, where the use of more than two reference stations would be required in order to achieve a suitable degree of accuracy over the entire site.

The present invention is directed to the provision of a spatial positioning and measurement system comprising a reference station which facilitates the ready establishment of z-axis information and is therefore suitable for establishing three-dimensional position in particular in a dynamic context and also in the presence of uneven ground or surface conditions.

### Summary of the Invention

Such a system is defined in independent Claim 1. Dependent Claims 2 to 15 define specific embodiments of the invention as defined by Claim 1. Further features of the invention may also be identified as follows:

In a preferred system according to the invention, three horizontal fixed referent stations are used, and one fixed vertical referent station. The detector means suitable includes a disc-shaped detector having a photo-sensitive surface about its periphery. The detector means may alternatively include a polygonal support having a plurality of facets, each facet having a photo-sensitive element disposed thereon.

In a preferred construction of the invention, the determination means is coupled to a display means for displaying the position of the object. The determination means may also be coupled to an input means for inputting information from an operator to the determination means, and the display means and the input means may be provided by a touch screen.

In a favoured application of the system of the invention, the object may be mounted on machinery at a construction site. The machinery in question may be a bulldozer or an earth-moving vehicle.

In a particular application, design information from the graphical database may be input into the determination means to provide guidance based on position and orientation matching. The system may then provide pitch, roll and yaw information for a vehicle. Alternatively, the system may provide yaw information only for the vehicle.

A secondary position sensing unit may also be provided, the secondary position sensing unit including a vision mechanism. The communication means may include a radio transmitter, and/or an omnidirectional optical strobe. Alternatively, the communication means may include a rotating unidirectional optical strobe. In a further application of the system of the invention, the object and the fixed referent stations may be underwater.

A significant and unique application of the present invention is for guiding autonomous vehicles. Through the use of multiple portable position sensors on a single machine, attitude (pitch, roll, and yaw) and Cartesian coordinate position information can be obtained. By integrating the information into an electronic database of a design, an autonomous vehicle can accomplish a task in a specific location without the need for a primary vision system. Of course, a secondary vision system could also be used to look for unexpected objects which have been misplaced. Such a secondary vision system could be provided by using any suitable mechanism, such as acoustical navigation systems or low-resolution camera systems.

In a spatial position system utilizing at least three fixed referent stations, although four are preferred, to determine the position of one or more portable position sensors, each fixed station may include a laser and a strobe transmitter. The laser produces a laser beam having a predetermined divergence or spread which is rotated at a constant angular velocity in a direction perpendicular to the spread. Each time the spread laser beam passes a specific point in its rotation, the strobe transmitter is triggered and a pulse is emitted.

This point in the rotation is referred to as "the rotation datum". The "rotation datum" is thus defined as an arbitrarily chosen "actuation" or "trigger" line selected internally for the corresponding fixed station independently of the other fixed stations. The strobe transmitter can be of the type emitting a light pulse (light strobe transmitter) or the type emitting a radio pulse (radio strobe transmitter).

There may be two types of fixed stations, horizontal and vertical. In the horizontal fixed station, the laser beam is rotated in a horizontal plane. In the vertical fixed station, the laser beam is rotated in a vertical plane. Preferably, at least three horizontal fixed stations and one vertical fixed station are used to ensure consistent x-, y-, z- positioning across an entire site.

An alternate spatial positioning system would require only three fixed stations to obtain three-dimension position capability, and would not have potential regions of ambiguity as in the above system. The three fixed stations would be set at different axes. A unique position solution exists for all points covered by the rotating laser beams from the fixed stations. The axes selected would be such that the area to be measured was covered by each of the spread laser beams emitted from the fixed stations.

The portable position sensor may include a light sensitive detector, a computer and a display. The light sensitive detector is preferably a disk of predetermined thickness oriented in a horizontal plane having a photosensitive area covering the circumference of the disk. When struck by either the laser beam or the strobe pulse, the detector generates an electric pulse which is sent to the computer. If a radio strobe pulse transmitter is used instead of a light strobe pulse transmitter, the portable position sensor also includes a radio receiver which generates an electric pulse which is sent to the computer upon receipt of a radio strobe pulse. Once the computer has accepted, time-labelled led and recorded two strobe pulses and an intermediate laser pulse form each fixed station, it can determine the three-dimensional position of the detector and present this information to the operator on the display for determination of a position on the site.

The horizontal position of the portable position sensor is determined through a trigonometric algorithm, which uses horizontal angles determined from time information of the rotating laser beams and the strobe signals of the horizontal fixed stations. The vertical position of the portable position sensor is generated using a trigonometric algorithm, which uses the horizontal distance to a vertical fixed station system, as calculated above, and an angle which is calculated from time information from the rotating laser beam and the strobe signal broadcast by the vertical fixed station system. The information can be displayed to an operator of mechanized equipment providing position information for control of the machine, or it can be sent to a autonomous control system for automatic control of a machine.

Additionally, the system advantageously may be used for surveying underwater, as long as the water is not too turbid.

In this way, complex geometries (e.g. parabolas, hyperbolas) can be accurately produced using the spatial positioning system in such operations as earthmoving and fabrication; whereas previous technology would only allow simplified geometric approximations.

Since the rotation datum of each fixed station is self-contained, i.e., each rotation datum is determined internally of the particular station, and the signal corresponding to the rotation datum is generated at the same fixed detector, multiple fixed detectors can be quickly setup, without the need to align the laser beams of opposite reference stations. Moreover, the fixed stations need not be located at the same elevation.

There is provided a unique solution for x, y, z, position measurement through the use of spread laser beams from the horizontal fixed stations to accurately determine x,y position over a signification variation in z (elevation). A linear array of detectors is not required. A simple, flat circular detector is preferred with no minimum vertical height requirement. This provides for an uncomplicated laser detector at the portable position sensor.

There is provided a unique solution for the z-coordinate determination. The solution uses a vertical fixed station. The vertical fixed station rotates a spread laser beam in a vertical plane. The spread beam strikes the portable position sensor, and through a self-contained rotation datum, the difference in time of the spread beam strike and the rotation datum provides a horizontal interior angle. Since the x-y position is known from measurements made with the horizontal fixed stations, the z-coordinate determination can be done with the same relative accuracy as the x-y coordinate determination.

The circular detector will produce an output pulse when crossed by a laser beam, which has a peak which consistently corresponds to the laser beam crossing the center of the portable position sensor. Although a detector disk of some thickness with a suitable photosensitive material on its circumference would be preferable, a polygonal detector, having a plurality of sides or facets may be used as a suitable alternative to the circular detector.

There is identified the origin of the laser beams which strike the portable position sensor by having each fixed station rotate at a unique rotation rate. Thus, the computer establishes a "window of time" when a laser beam or a strobe pulse from a particular fixed station is expected to arrive. The computer will continually update the windows of time to accommodate for movement of the portable position sensor and drift in the rotation rates of the motors. Alternatively, the laser beams may be identified through modulation of the wavelength of the lasers at different rates, or by using lasers of differing wavelengths.

The use of multiple portable detectors on a single machine to determine attitude and position can also be used to provide better information to equipment operators. Specially designed graphical, textual and numerical information can be presented to the operators to allow for improved equipment productivity and also to limit the amount of layout surveying required for complex operations.

### Brief Description of the Drawings

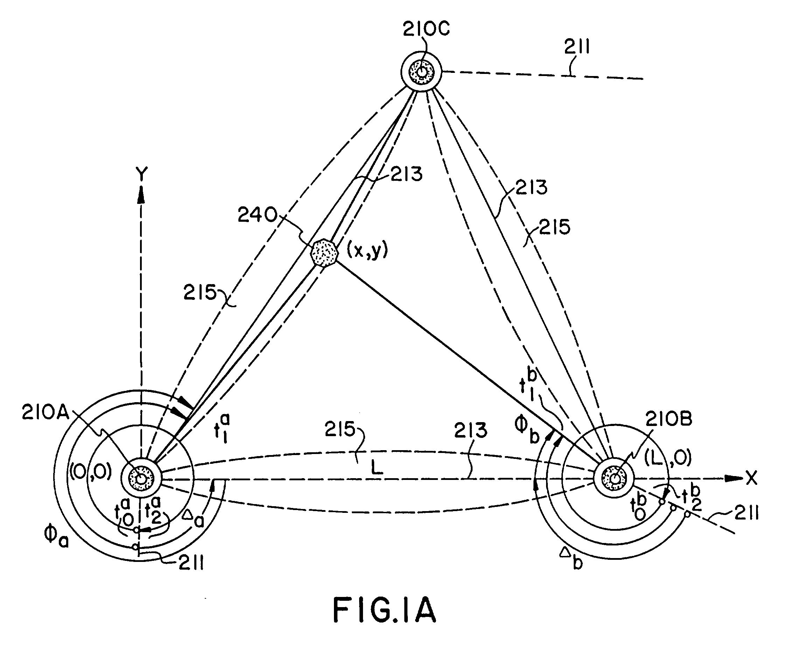

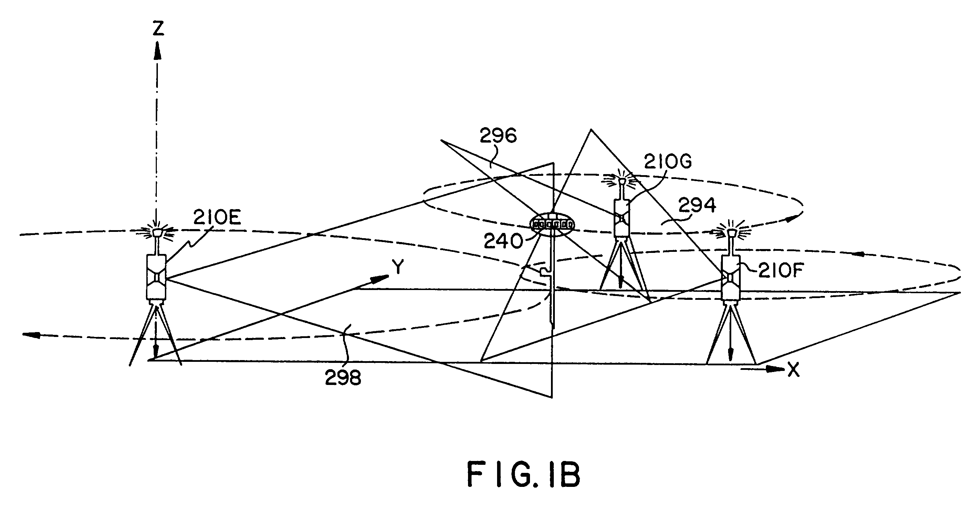

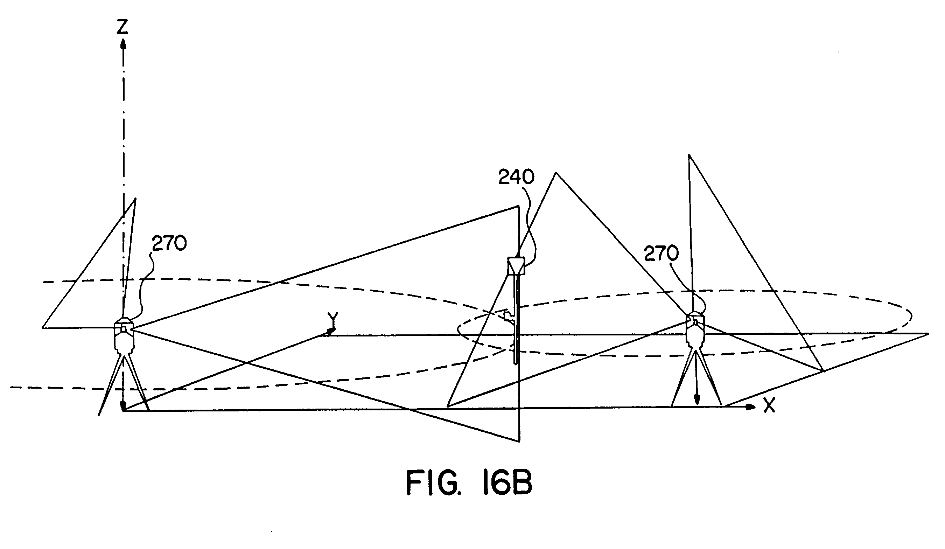

The invention is illustrated in various embodiments in Figures 1 to 15 inclusive. Figures 16B, 18 to 21 inclusive and 23 relate to the invention of granted European Patent Application No. 91919739.2, from which the present application is divided. The remaining figures describe various other aspects of spatial positioning and measurement systems, are included as background art useful to the understanding of the present invention, and do not form part of the present invention as defined in the appended claims.
Figure 1A is a schematic view illustrating horizontal sensing and positioning in a spatial positioning and measurement system;
Figure 1B is a schematic view illustrating three-dimensional position sensing and positioning in a spatial positioning and measurement system;
Figure 2 is a schematic view illustrating vertical sensing and positioning in the system of Figure lA;
Figure 3 is a flow chart illustrating horizontal and vertical sensing and positioning as illustrated in Figures 1 and 2;
Figure 4 is a side elevational view of a horizontal fixed station in a spatial positioning and measurement system;
Figure 5 is a side elevational view of another horizontal fixed station;
Figure 6 is a side elevational view of another horizontal fixed station:
Figure 7 is a side elevational view of a vertical fixed station in a spatial positioning and measurement system;
Figure 8 is a side elevational view of a portable position sensor in in a spatial positioning and measurement system;
Figures 9A-9D illustrate graphical views of a display when the system is used for construction lay-out;
Figures 10A and 10B illustrate exemplary display screens for equipment operators;
Figures 11A and 11B illustrate exemplary display screens for equipment operators;
Figures 12A and 12B illustrate exemplary display screens for equipment operators;
Figure 13 illustrates an automated environment with equipment for yaw control;
Figure 14 illustrates a mechanized cutting robot with yaw control;
Figure 15 illustrates a piece of mechanized earthmoving equipment with pitch, roll and yaw control;
Figure 16A is a schematic view illustrating three dimensional sensing and positioning using three fixed stations having counter-rotating beams;
Figure 16B is a schematic view illustrating three dimensional sensing and positioning using two double laser referent stations;
Figure 16C is a schematic view illustrating three dimensional sensing and positioning using one double laser fixed station and a portable base line;
Figure 17 is a partial top plan view of a rotating laser beam and a reflective surface for use with arrangements as shown in Figures 16A - 16C;
Figure 18 includes a top plan view and two side views of a dual beam station for use with arrangements as shown in Figures 16A and 16B;
Figure 19 is a schematic view of a fixed referent station with a reflective surface for use with any of the arrangements shown in Figures 16A - 16C;
Figure 20 is a schematic view of a fixed referent station with a reflective surface for use with any of the arrangements shown in Figures 16A - 16C;
Figure 21 is a schematic view of a portable position sensor with a detector for use with any of the arrangements shown in Figures 16A - 16C;
Figure 22 is a schematic view of a base line position sensor for use with the arrangement shown in Figure 16C;
Figures 23A, 23B and 23C are top plan views of a reflective surface in accordance with another arrangement;
Figure 24 is a schematic view of a base line position sensor for use with the arrangement shown in Figure 16C;
Figure 25 is a cross-sectional view of a detector for use with another arrangement;
Figure 26 is a schematic view of a rotational platform in accordance with another arrangement; and
Figure 27 is a schematic view of a rotational platform in accordance with yet another arrangement.

### Figure 1A

A spatial positioning system for horizontal positioning is schematically shown in Figure lA. The system includes preferably three horizontal fixed referent stations (hereinafter "fixed stations") 210A, 210B and 210C, although only two such stations must be used, and portable position sensor 240. For ease of explanation, horizontal fixed station 2l0A is located at point (0,0) on a Cartesian coordinate system. Horizontal fixed station 210B is spaced a distance "L" along the x axis from horizontal fixed station 2l0A, so that horizontal fixed station 210B is located at point (L, O). Horizontal fixed station 210C is located at another known position. The rotation datum 211 of the individual horizontal fixed stations is randomly positioned for each corresponding station. Portable position sensor 240 is randomly spaced a distance "x" along the x axis and a distance "y" along the y axis from horizontal fixed station 210A, so that portable position sensor 240 is located at point (x,y). The locations of the fixed stations are not limited to specific locations, and need only be somewhere within the three-dimensional Cartesian coordinate system. Areas of ambiguity 215 exist where the interior angles formed by line 213 between a pair of fixed stations 210 and the lines connecting the portable position sensor 240 are small, for example, of the order of 5^{o}. In this area of ambiguity 215, position measurements become increasingly inaccurate as the portable position sensor approaches the line 213. The area of ambiguity 215 does not affect position measurement if three horizontal fixed stations 210 are used in calculating the position of the portable position sensor 240. This is because each pair of fixed stations, when detected by portable position sensor 240, generates x-y position information. Thus, when using three fixed stations, three x-y positions can be obtained (from the three permutations of pairs). These three x-y positions can be averaged to determine the actual x-y position. Alternatively, an algorithm may be used to determine which pair of fixed stations provides the most accurate position information based, for example, on the interior angles.

### Figure 2

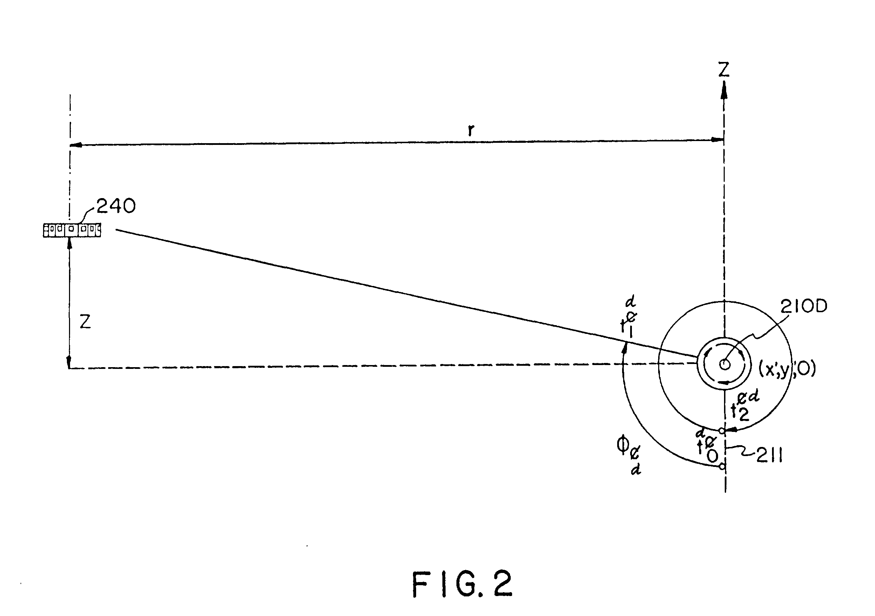

A spatial positioning system for vertical positioning is schematically shown in Figure 2. Vertical fixed station 210D is located at a point (x', y', O). The portable position sensor 240 is located at a horizontal distance "r" and a random vertical distance "z" from vertical fixed station 210D.

### Figure 1B

An alternative version of the spatial position system is shown in Figure lB. In this alternative version three fixed stations 210E, 210F and 210G are rotated horizontally. However, each of the three spread beams, 294, 296 and 298 are tilted on different planes. The system would also work where the axes of rotation of the fixed stations were tilted so that the axis of rotation of each fixed station is distinct from the axes of rotation of the other fixed stations, and the rotation of the laser beams 294, 296 and 298 is on different planes. The x spread (divergent) tilted beams 294, 296 and 298 sweep throughout the area of the site. In some applications, the spread beams 294, 296 and 298 will be shuttered or turned off in areas not within the site. Fixed station 210G is shown as generating a rotating spread beam 296. The spread beams 294 and 296 are shown on tilted planes which are rotated about a vertical axis. Optimum accuracy would be achieved if the axes are each rotated 60° from each other. This alternative, version of the spatial positioning system will provide three dimension position information at the portable sensor 240 from the spread beams of the fixed stations 210E, 210F and 210G.

### Figure 4

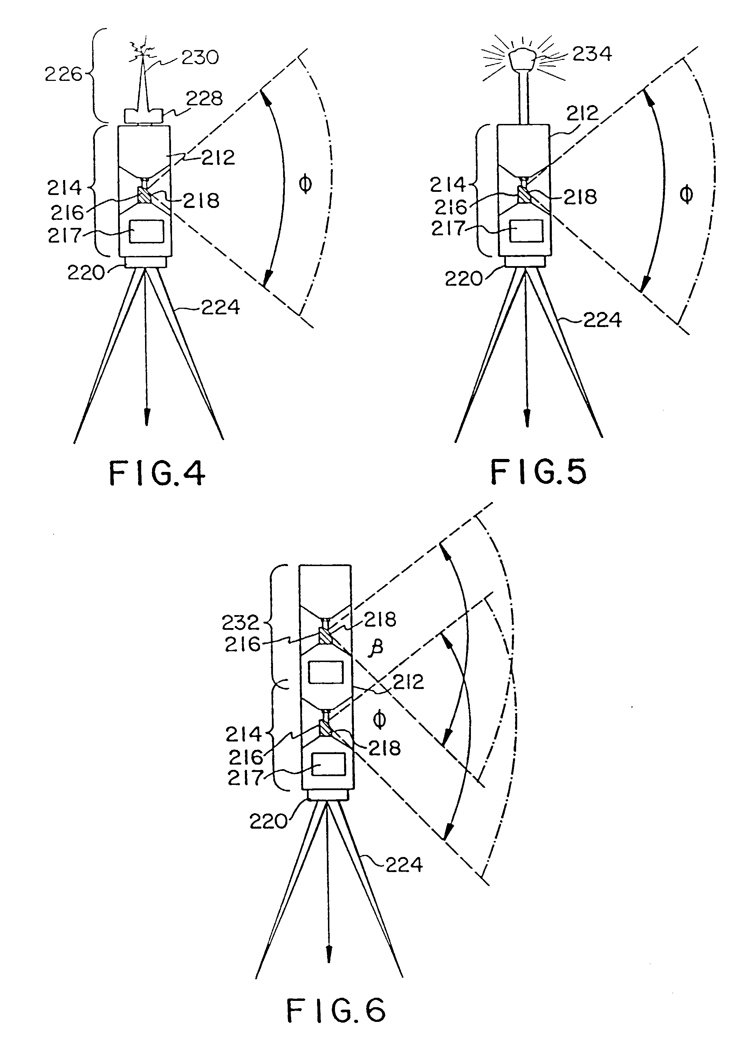

As is shown in Figure 4, each horizontal fixed station 210A, 210B and 210C preferably includes a laser 212 contained within a housing 214. The beam generated by laser 212 is directed to and reflected off of prism 216 having a conical reflector surface 218, thus producing a reflected laser beam having a predetermined angle of spread, i.e., amount of divergence, in the vertical direction. Of course, prism 216 and conical reflector surface 218 may be replaced by any other suitable means to produce the angle of spread φ.

The prism 216 with its reflective surface is rotated by a motor 217 contained within housing 214. It is most important that the motor, and hence the prism, rotate at a highly stable rotation rate (angular velocity). The stability of the rotation rate is critical to the measurement accuracy which the positioning system can achieve.

The prism, laser, and motor are aligned so that the laser beam produced by the laser 212 is reflected perpendicularly, which creates a reflected beam which is rotated in a plane orthogonal to the source laser beam. Thus, the spread of the reflected laser beam is perpendicular to the plane of rotation of the prism.

The housing 214 is preferably fixed to a levelling base 220. A conventional levelling mechanism, such as levelling bubbles (not shown), is used in such a way that will indicate when the plane of rotation is properly aligned with the horizon. A self-levelling mechanism (not shown) can also be used to maintain fine level requirements of the plane of rotation of the rotating laser beam. The levelling base 220 also preferably includes adjustable legs 224 to facilitate alignment of the plane of rotation. As illustrated in Figure 4, this can be achieved by a conventional tripod having adjustable legs.

Each horizontal fixed station 2l0A, 2l0B, 2l0C also preferably includes a communication mechanism 226. The communication mechanism 226 is activated and transmits a pulse of energy when the reflected laser beam crosses the rotation datum 211, in a manner to be described in detail below, so as to provide the time information necessary to calculate the position of the portable position sensor. As illustrated in Figure 4, this communication mechanism is formed by radio strobe transmitter 228 and radio antenna 230.

### Figure 5

Alternatively, the communication mechanism is formed by a light strobe transmitter 234, as illustrated in Figure 5, or by any other mechanism which can emit the desired communication information such as, for example, coaxial cable or optical fiber cable capable of delivering an energy pulse. The communication mechanism can either be a rotating unidirectional mechanism, or a fixed omnidirectional mechanism. As is illustrated in Figure 5, the light strobe transmitter 234 emits an omnidirectional light beam, which can be received by the portable position sensor 240.

### Figure 6

Figure 6 illustrates an alternative light strobe transmitter 232 in which a directional light beam is emitted. This alternative light strobe transmitter 232 includes a prism 216 with a conical reflector 218, so that the reflected strobe light beam has an angle of spread β in the vertical direction. This beam also can be divergent in the horizontal direction. The prism 216 of the alternative light strobe transmitter 232 rotates at a slower or faster speed than the prism 216 of the laser housing 214, so that over a period of time the strobe will emit a strobe transmission in all desired directions.

### Figure 7

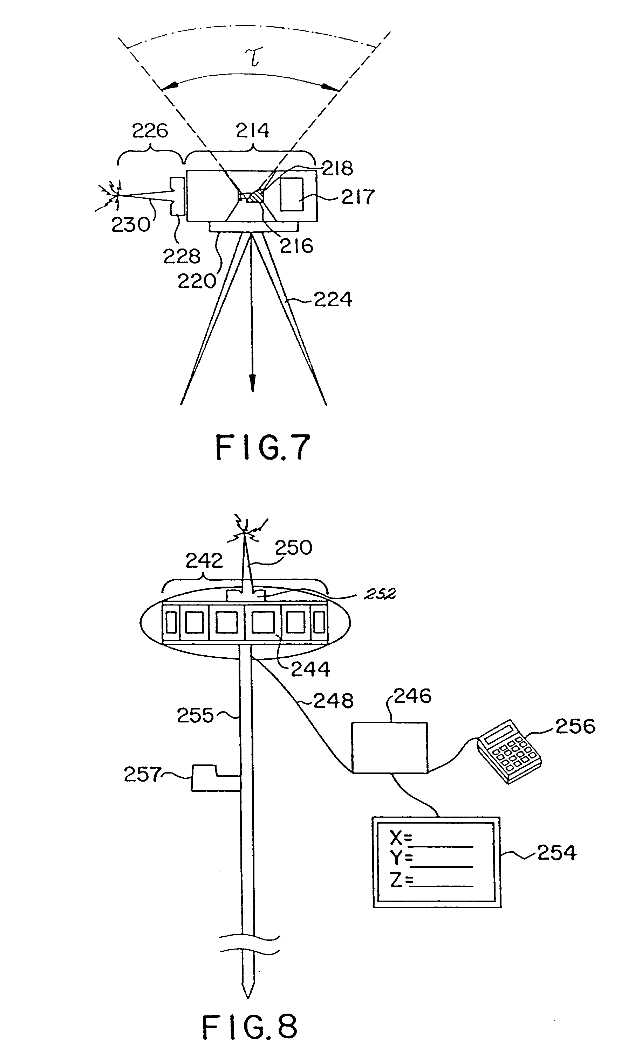

The vertical fixed station 210D is illustrated in Figure 7. The vertical fixed station is similar in all respects to the horizontal fixed station shown in Figure 4 except that the axis of beam spread, and hence prism 216, is oriented horizontally instead of vertically, so that the laser beam is rotated in a vertical plane. In this way, the reflected laser beam has an angle of spread T in the horizontal direction. Although a vertical fixed station having a radio strobe transmitter communication mechanism is shown in Figure 7, it is understood that a light strobe transmitter or other type of communications mechanism can be used. The rotation datum 211 of the vertical fixed station is preferably aligned with the z-axis through a levelling mechanism used to level the laser-prism-motor housing 214; however, a time offset, to be described below, may be used.

### Figure 8

Portable position sensor 240, as shown in Figure 8, preferably includes a polygonal detector 242 to detect the presence of both the laser beams and light strobe pulses. Alternatively, this sensor ideally could be formed of a flat disk with a suitable photosensitive material disposed about its circumference.

The polygonal detector 242 is formed of a plurality of individual photodetectors 244, such as silicon based photodetectors or any other suitable photodetectors, disposed around the circumference of the sensor on the outside facets of a polygonal-shaped support. An optical filter (not shown), fixed to the front face of each photodetector 244, may be used in situations were the ambient light level is high, such as outdoors in the sun. However, an optical filter is not needed if competing light sources are of low levels, such as outdoor at night or in many closed indoor environments. Each photodetector 244 generates an electric pulse when a laser beam strikes its surface. This electric pulse is sent to a computer 246, via a communication link 248, as part of the information necessary to determine the spatial position of the portable position sensor 240.

Portable position sensor 240 also preferably includes radio receiving antenna 250 for receiving radio signals generated by the fixed stations 210A, 210B, 210C, and 210D. As mentioned briefly above, the radio signals generated by the fixed stations convey information about the time at which the laser beams cross their respective rotation datum. Radio receiver 252 operatively coupled to antenna 250 generates an electric pulse when it receives a radio signal. This electric pulse is also sent to the computer 246 as part of the information necessary to determine the position of the portable position sensor. Alternatively, light strobe pulses transmitted by either light strobe transmitters 234 or 232 could be received by the polygonal detector 242. In this case, the photodetectors 244 of the polygonal detector 242 generate electrical pulses upon detection of a light strobe pulse. These electric pulses are sent to the computer 246 via communication link 248, as part of the information necessary to determine the position of the portable position sensor 240. To aid in their identification, the light strobe pulses may be coded by amplitude or wavelength modulation of the pulse, or by multiple pulses, or by pulses of differing durations.

The computer 246, which can be of any suitable type, assigns a time label to each electrical pulse received from the polygonal detector 242 and, if used, the electrical pulses from radio receiver 252. The system is calibrated with an offset to compensate for any time lags due to, for example, the speed with which light travels from the prism 216 of each fixed station to the portable position sensor 240, or delays incurred by the time required for actuation of various parts. The computer generates the coordinates of the portable position sensor 240 through a series of mathematical algorithms. The portable position sensor 240 can be attached to a range pole 255 which is equipped with a bubble level 257. Thus, the computer 246 would determine the position of the bottom of the vertically aligned range pole 255 by subtracting the length of the range pole 255 from the computed z-coordinate of the portable position sensor 240.

The computed position coordinates are preferably output to an electronic display 254 coupled to computer 246. Display 254 is preferably an LCD or touch-screen, although any suitable display may be used. Input mechanism 256 is also preferably coupled to computer 246 to allow input of the positions of the fixed stations and to request various options in the software, such as system calibration. The input mechanism 256 is preferably a keyboard, although any other suitable input device may be used. A touch-screen monitor could be used for both input mechanism 256 and display 254.

The spatial positioning system includes a calibration sequence which must be followed before useful position information can be generated by the computer 246. The calibration sequence determines the x,y coordinates of the horizontal fixed stations 210A, 210B, 210C, the x, y, z coordinates of the vertical fixed station 210D, and the offset calibration times of the rotation datums. The calibration sequence generates all necessary calibration information by successively placing the portable position sensor 240 in three points of known position. The offset calibration time is a time added or subtracted by the computer to the time labels corresponding to the rotation datum 211 of a horizontal fixed station (e.g., 210A). This time adjusts the time label to when the rotating laser beam is aligned with the straight line 213 connecting an alternate fixed station (e.g., 210B or 210C) from which position calculation will be generated. The time labels corresponding to the pair of fixed stations (e.g., 210A and 210B, or 210A and 2l0C) are to be used to generate the coordinate information of the portable position sensor 240.

As discussed above, each time a laser beam emitted by a fixed station passes a specific point in its rotation, the strobe or radio transmitter is triggered and a pulse is emitted. This point in the rotation is referred to as "the rotation datum". Each rotation datum is generated internally of its corresponding fixed station. The position (x, y, z) of the portable position sensor 240 is determined from the angle turned by each laser beam from its rotation datum to the portable position sensor. These angles are calculated through time measurements of the laser beam pulses and strobe pulses detected at the portable position sensor.

In operation, horizontal positioning relies on the horizontal fixed stations 210A, 210B, 210C. These fixed stations are located in known positions. The rotation datum which triggers emission of the strobe pulse can be randomly located. The computer 246 runs through a calibration sequence, which involves placing the portable position sensor in three known horizontal positions, and calculates a time offset for the time of arrival of the strobe signal. This time offset is equivalent to the difference in time between the rotation datum being located on the line connecting the fixed station with any of the others. Vertical positioning relies on both horizontal position of the portable position sensor 240 and the time information relayed by the vertical fixed station 210D, as can be seen from Figure 2.

### Figure 3

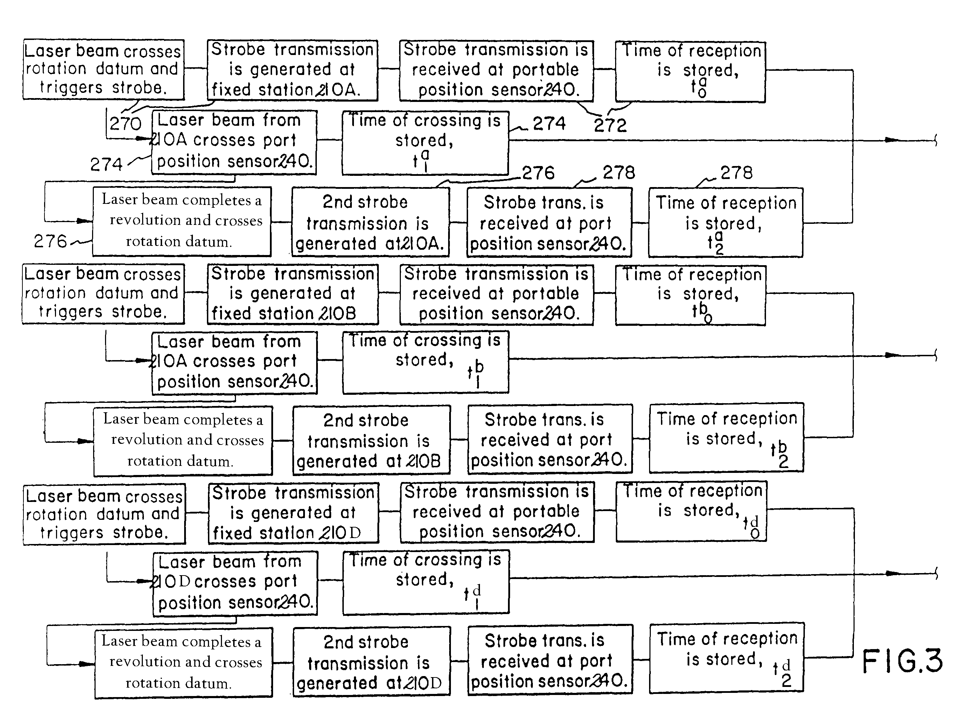

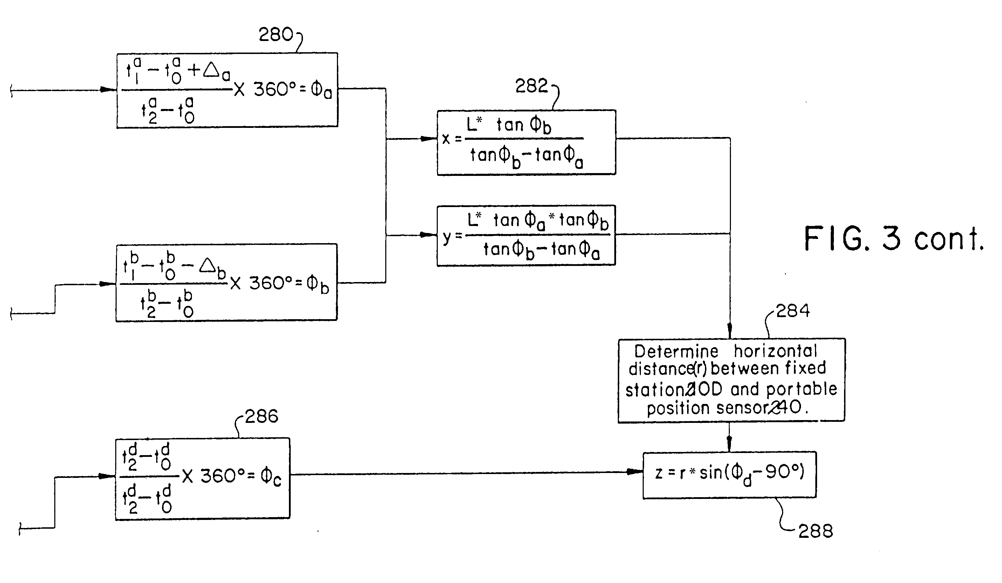

Horizontal fixed station 210A will be used as an example to explain the series of events set forth in the flow chart of Figure 3. This series of events begins when the laser beam emitted by fixed station 210A crosses the rotation datum and a strobe pulse is emitted (at point 270). The strobe pulse is received at the portable position sensor 240 and the time of reception, i.e., the time label of this pulse, is stored in computer 246 (at point 272). As the laser beam emitted by fixed station 210A sweeps the area, it eventually will strike the portable position sensor 240, and the time of this strike, i.e., its time label, will be stored in computer 246 (at point 274). As the laser completes a revolution, it again crosses the rotation datum and triggers a second strobe pulse (at point 276). The second strobe pulse is received by the portable position sensor and the time of reception is similarly recorded by the computer 246 (at point 278). It is important to note that this series of events simultaneously occurs for each of the other fixed stations and the portable position sensor.

Once the computer records all of the necessary time labels, each horizontal angle is calculated as the ratio of the time of the laser beam striking the portable position sensor minus the time of the first strobe pulse, plus the calibration offset for the fixed station, to the time of the second strobe pulse, multiplied by 360 degrees. This can be expressed by the following equations (at point 280):$\frac{{\text{t}}_{\text{1}}^{\text{a}} {\text{- t}}_{\text{0}}^{\text{a}} {\text{+ Δ}}_{\text{a}}}{{\text{t}}_{\text{2}}^{\text{a}} {\text{- t}}_{\text{0}}^{\text{a}}} {\text{x 360° = φ}}_{\text{a}} \text{,} \frac{{\text{t}}_{\text{1}}^{\text{b}} {\text{+ t}}_{\text{0}}^{\text{b}} {\text{x Δ}}_{\text{b}}}{{\text{t}}_{\text{2}}^{\text{b}} {\text{- t}}_{\text{0}}^{\text{b}}} {\text{x 360° = φ}}_{\text{b}}$

The horizontal coordinates (x,y) are then calculated through the following trigonometric algorithms (at point 282):$\text{x =} \frac{{\text{L * tanφ}}_{\text{b}}}{{\text{tanφ}}_{\text{b}} {\text{- tanφ}}_{\text{a}} \text{,}} \text{y =} \frac{{\text{L * tanφ}}_{\text{a}} {\text{* tanφ}}_{\text{b}}}{{\text{tanφ}}_{\text{b}} {\text{- tanφ}}_{\text{a}}}$

Once the horizontal position has been calculated, the horizontal distance between the portable position sensor and the vertical fixed station 210D is determined (at point 284). The vertical angle is calculated using the same ratio as used in conjunction with the horizontal angles described above. This equation is (at point 286):$\frac{{\text{t}}_{\text{1}}^{\text{d}} {\text{- t}}_{\text{0}}^{\text{d}}}{{\text{t}}^{\text{d}} {\text{- t}}^{\text{d}}} {\text{x 360° = φ}}_{\text{d}}$

The vertical coordinate z is then determined by the following trigonometric algorithm (at point 288):${\text{z = r * sin(φ}}_{\text{d}} \text{= 90°)}$

Similarly, equations can be derived for solving the position of the portable position sensor 240 for the alternative spatial positioning system depicted in Figure 1B. Assuming the fixed stations 210E, 210F and 210G are located in the positions (0, 0, 0), (x_{f}, y_{f}, z_{f}) and (x_{g}, y_{g}, z_{g}), respectively; and the tilt angles (as measured from the vertical axis) of the laser beams γₑ, γ_{f}, γ_{g} are 0°, 60°, and 60°, respectively; then the position of the portable position sensor 240 can be solved by the equations:$\text{x =} \frac{{\text{x}}_{\text{f}} {\text{sin θ}}_{\text{f}} {\text{- x}}_{\text{g}} {\text{sin θ}}_{\text{g}} {\text{- y}}_{\text{f}} {\text{cos θ}}_{\text{f}} {\text{+ y}}_{\text{g}} {\text{cos θ}}_{\text{g}} {\text{- z}}_{\text{f}} {\text{√3 + z}}_{\text{g}} \text{√3}}{{\text{(sin θ}}_{\text{f}} {\text{- sin θ}}_{\text{g}} {\text{) - tan θ}}_{\text{e}} {\text{(cos θ}}_{\text{f}} {\text{- cos θ}}_{\text{g}} \text{)}}$${\text{y = x(tan θ}}_{\text{e}} \text{)}$$\text{z =} \frac{\text{√3}}{\text{3}} {\text{[(x - x}}_{\text{f}} {\text{)sin θ}}_{\text{f}} {\text{- (y - y}}_{\text{f}} {\text{)cos θ}}_{\text{f}} {\text{] + z}}_{\text{f}}$

The spatial positioning system described above can be utilized in a multitude of applications. In addition, the interface with the user, the display 254, can be used to provide design information from a graphical database, such as computer-aided-design (CAD), through an interface with the computer. In this way, a user of the spatial positioning system can graphically view his position within a two-dimensional or three-dimensional graphical model.

Computer simulations have shown that the spatial positioning system disclosed herein can achieve position measurement accuracies of ± 5mm over a 400 m site, with a position measurement update rate of several times a second. This high degree of accuracy and the ability to provide the position information in real-time allows the disclosed positioning system to be applied to a number of applications where accurate, real-time positioning was not before possible. In addition, the disclosed system can be interfaced with graphical databases and provide real-time positioning in modelled graphical environments.

### Figure 16A

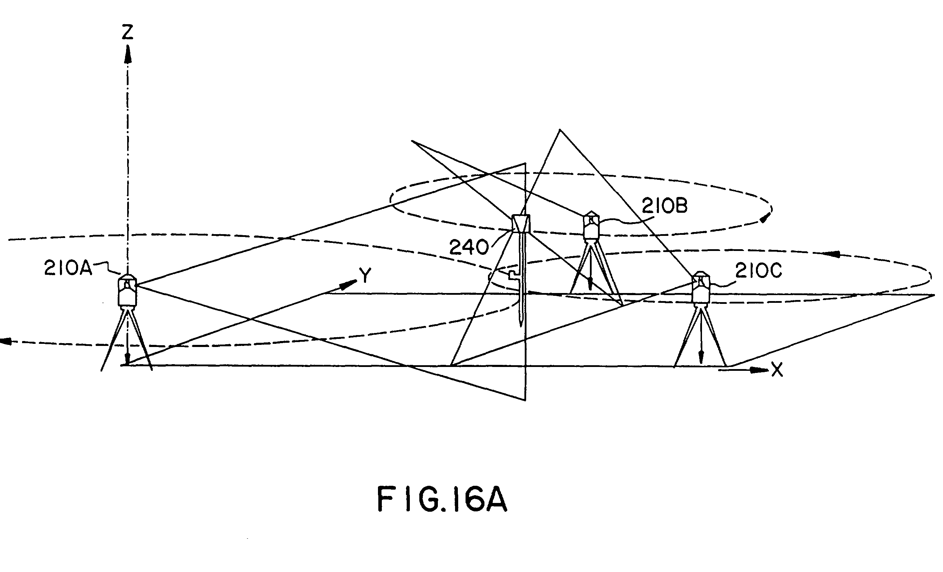

Another spatial positioning system for three-dimensional positioning is schematically shown in Figure 16A. The system includes preferably three fixed reflecting referent stations (hereinafter "reflecting stations") 210A, 210B, and 210C, and a portable position sensor 240.

### Figure 17

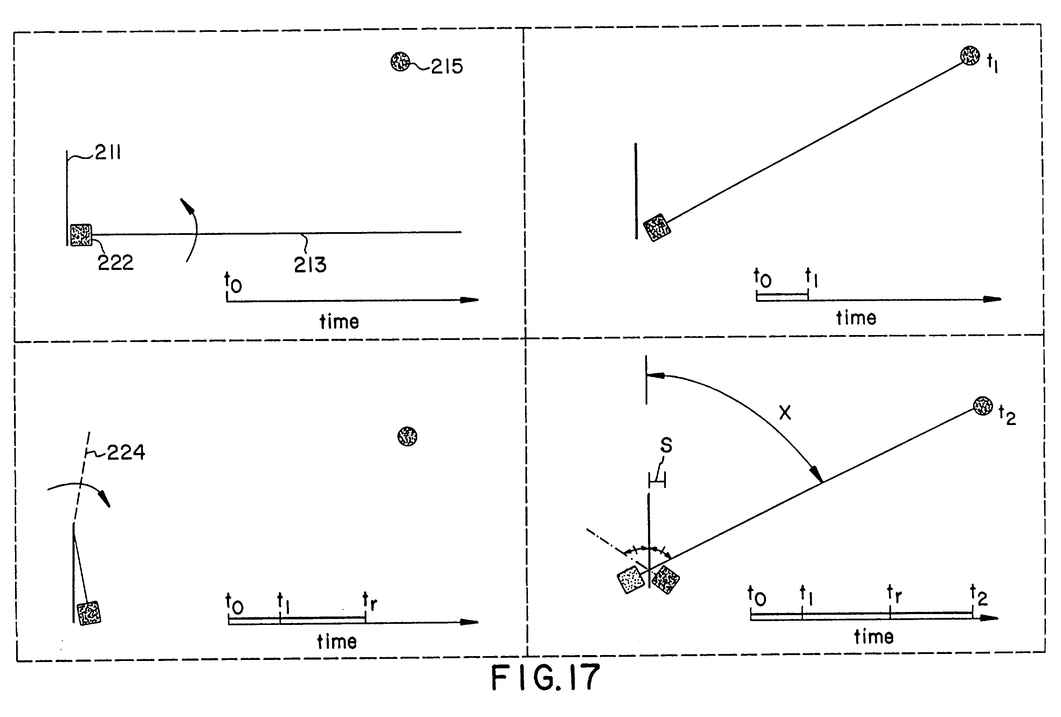

As shown in Figure 17, the reflecting station includes a reflective surface 211 which is placed behind rotating prism 222. The prism 222 creates a single primary laser beam 213 (hereinafter the "primary beam") which is rotated about an axis.

### Figures 19 and 20

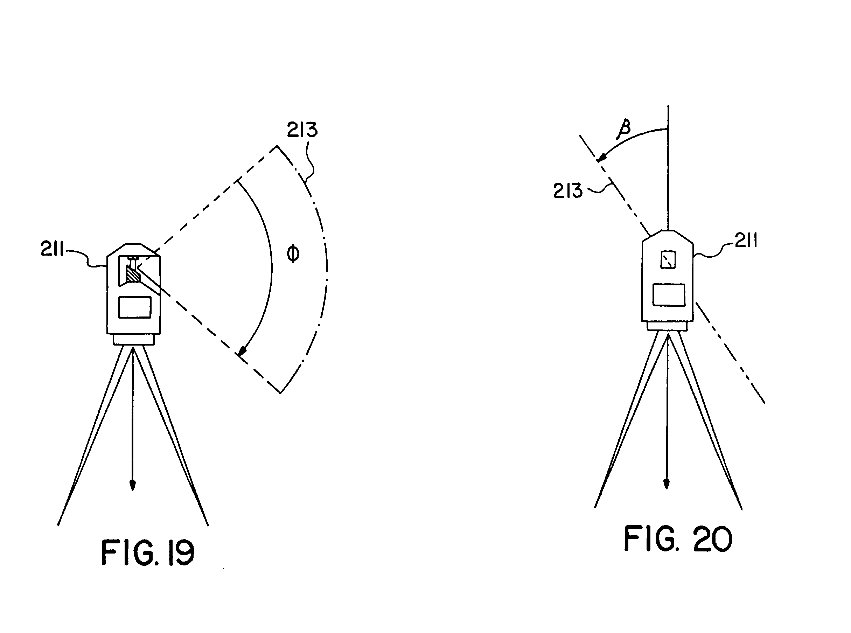

As shown in Figures 19 and 20, the primary beam 213 has an angle of divergence, φ, in a plane which is inclined at an angle, β, from the rotational axis. When the rotation of the primary beam 213 causes the beam to strike the reflective surface 211, a secondary laser beam 224 (Figure 17) is created. The reflected laser beam (hereinafter the "secondary beam") 224 has the same divergence, φ, and inclination, β, as the primary beam 213, but it rotates in the opposite direction. For any point 215 (Figure 17) which is crossed by both the primary and reflected beams 213, 224, the horizontal angle, X, can be determined by the time difference between the time of crossing of the point by the two laser beams. An approximation of this angle can be expressed by Equation 1: 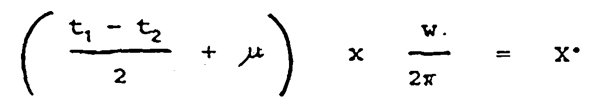
- t₁ =: time of crossing of primary beam (213)
- t₂ =: time of crossing of secondary beam (224)
- µ =: offset factor
- W =: speed of rotating laser (revs./sec.)
- X⁰ =: horizontal angle from the fixed referent station to the portable position sensor
The offset, µ, is a function of the distance of the reflective surface(s) from the center of rotation of the prism 222.

### Figures 23A, 23B and 23C

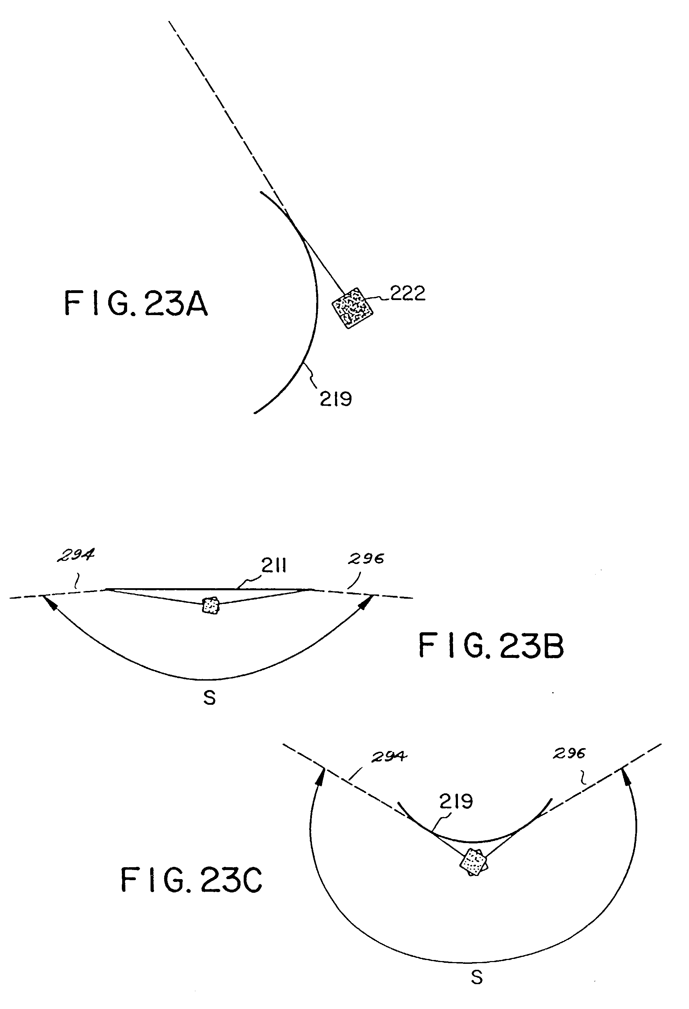

Alternatively, the reflective surface 211 may be curved as shown in Figures 23A, 23B and 23C. The curved reflective surface 219 can be used to increase the scan angle, S. The scan angle, S, is the horizontal angle which is swept by both the primary laser beam 213 and the secondary laser beam 224. Figures 23B and 23C show that the scan angle S is greater for a curved reflective surface than for a flat reflective surface or that reflective surfaces.

### Figure 21

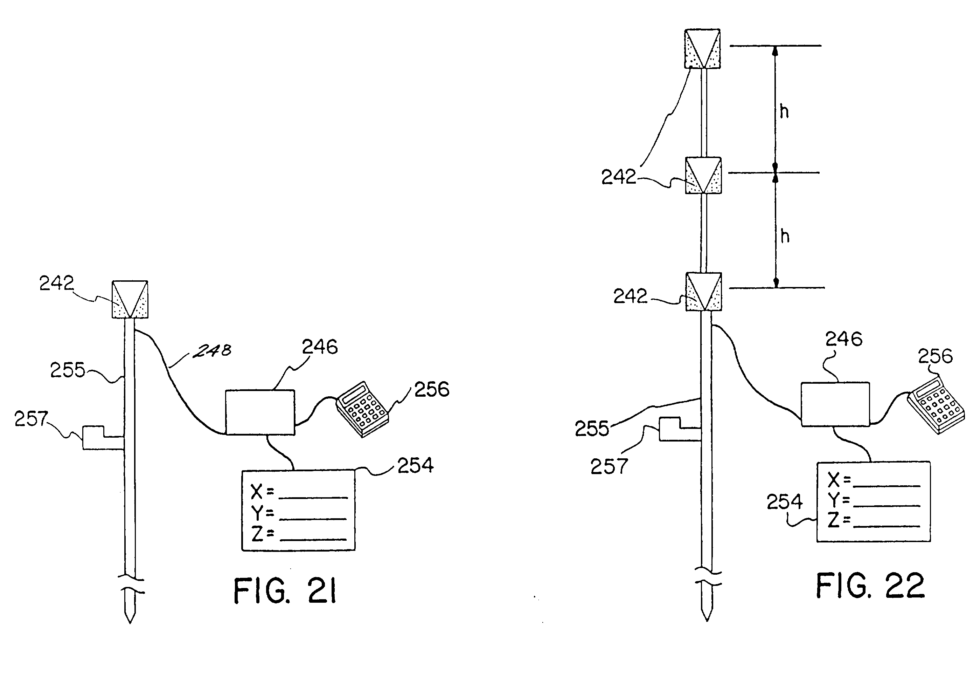

The portable position sensor 240, as shown in Figure 21, preferably includes a 360° lens detector 242 to detect the presence of the laser beam; however, any suitable detector may be used.

### Figure 25

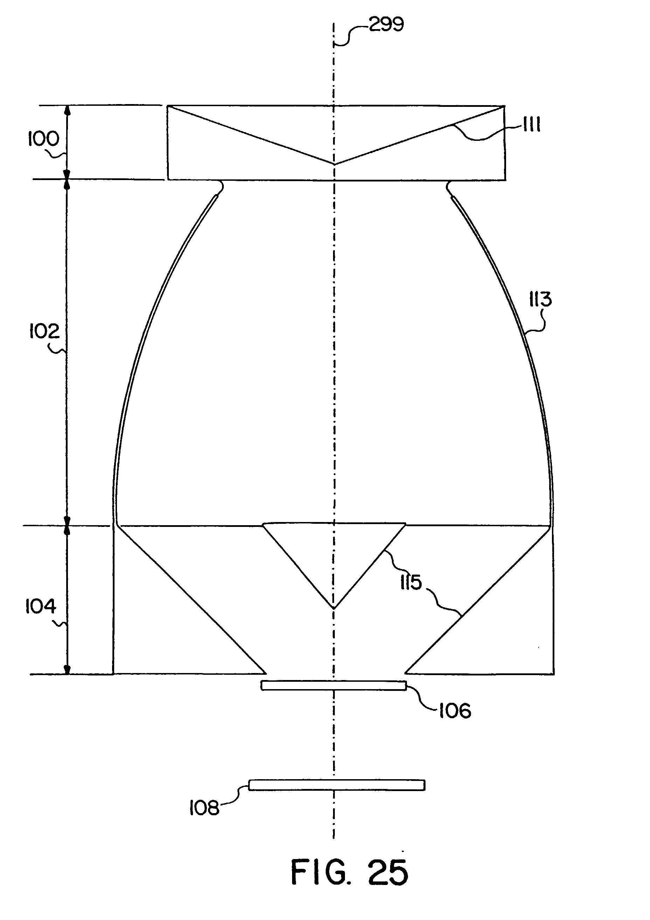

The 360° lens detector 242 preferably consists of an axicon 100, collimator 102, condenser 104, filter 106, and photodetector 108 which are aligned along an axis, as shown in Figure 25. The axicon 100 receives light from any direction from a range of incoming angles off the horizontal plane and redirects this light into the collimator 102. The collimator 102 redirects the light from the axicon 100 so that the direction of this light is closer to a direction which is parallel to the axis 299 of the detector. The light then enters the condenser 104 where the light is brought closer to the axis 299 of the detector. This arrangement of optics allows efficient use of optical filters 106 (i.e. optical bandpass filters), which are sensitive to incidence of light, and also reduces the size of the photodetector 108 surface area required. A lens (not shown) could also be placed before the photodetector 108 to further reduce the surface area required.

The reflective surface 111 of the axicon 100 can be conical, spherical, parabolic or any other suitable shape. The reflective surface 113 of the collimator 102 is of a shape which complements the shape of the reflective surface 111 of the axicon 100 to achieve the desired result of making the direction of the light parallel to the axis 299 of the detector 242. The collimator 102 may also consist of a system of lenses. Any or all of the reflective surfaces 111, 113, 115 can be designed to employ internal reflection.

The photodetector 108 generates an electric pulse when a laser beam strikes its surface. This electric pulse is sent to a computer 246, (Figure 21) via a communication link 248 and forms part of the information necessary to determine the position of the portable position sensor 240, (Figure 16A).

The computer 246, which can be of any suitable type, assigns a time label to each electrical pulse received from the detector 242. The computer generates the coordinates of the portable position sensor 240 through a series of mathematical algorithms. The portable position sensor 240 can be attached to a range pole 255 (Figure 21) which is equipped with a bubble level 257. Thus, the computer 246 determines the position of the bottom of the vertically aligned range pole 255 by subtracting the length of the range pole 255 from the computed z-coordinate of the portable position sensor 240.

The computed position coordinates are preferably output to an electronic display 254 coupled to computer 246. Input mechanism 256 is also preferably coupled to computer 246 to allow input of the positions of the fixed stations and to request various options in the software, such as system calibration discussed below. The input mechanism 256 is preferably a keyboard, although any other suitable input device may be used.

The positioning system includes a calibration sequence which may be followed to determine the location of the fixed stations. The calibration sequence determines the x, y, z coordinates and the pitch and roll of the fixed stations 210A, 210B, 210C, (Figure 16A). The calibration sequence generates all necessary calibration information by successively placing the portable position sensor 240 in four points of known position. The computer records the timing information generated at the four known points. From this information, the x, y, z coordinates and the pitch and roll of the or each fixed station are calculated.

### Figure 16B and 18

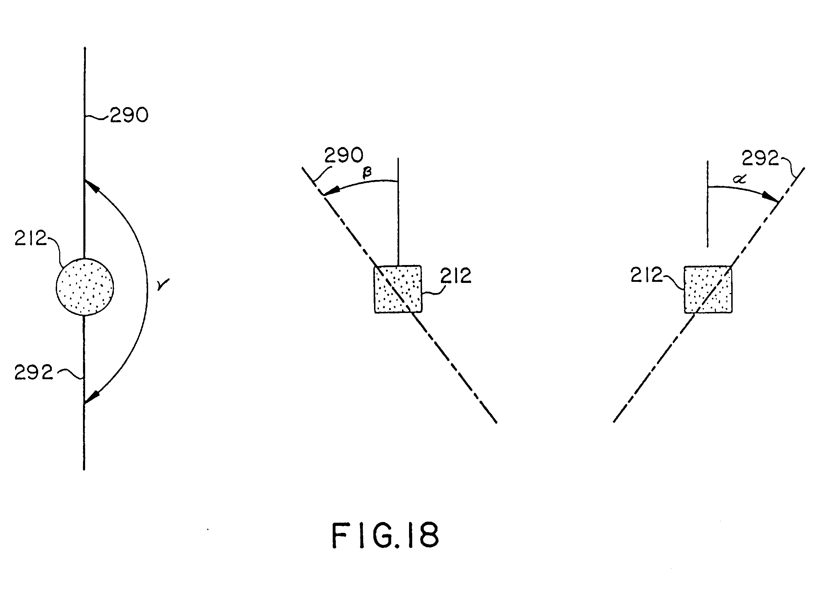

In another arrangement, only two fixed referent stations are required to provide three dimensional positioning and measurement capability, as illustrated in Figure 16B and Figure 18. The fixed referent stations differ from the reflecting station described above in that two primary beams, 290, 292, (Figure 18) are produced by the rotating prism 212. This type of fixed referent station having two primary beams and a reflective surface will be called a "dual beam station" 270. The two primary beams 290, 292 are inclined at opposite angles, β and α, from the axis of rotation, as shown in Figure 18. The two laser beams are separated by some horizontal angle, γ, which creates a time period between when the two laser beams cross a particular point in space. Each of the primary beams 290, 292 produces a secondary beam, 294, 296, which is produced when the primary beams strike the reflective surfaces 211 (Figures 17 and 23A, 23B and 23C).

Both horizontal and vertical angle measurements can be determined from the time information generated from one detector at the portable position sensor, from each dual beam station. An approximation of horizontal angle, X, is determined by the Equation above,' using either pair of primary and secondary beams. The vertical angle, V, is determined from the time difference between the crossing of the two primary beams, 291, 292. An approximation of the vertical angle, V, is given by Equation 2: 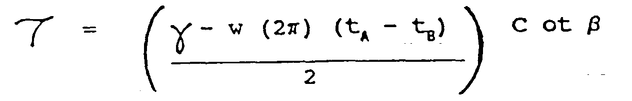
- τ =: vertical angle
- γ =: horizontal angle offset of the primary beams, 290, 292
- W =: rate of rotation (revs./sec.)
- t_{A} =: time primary beam 290 crosses the point
- t_{B} =: time primary beam 292 crosses the point
- β =: inclination of the beams.

### Figures 16C, 22 and 24

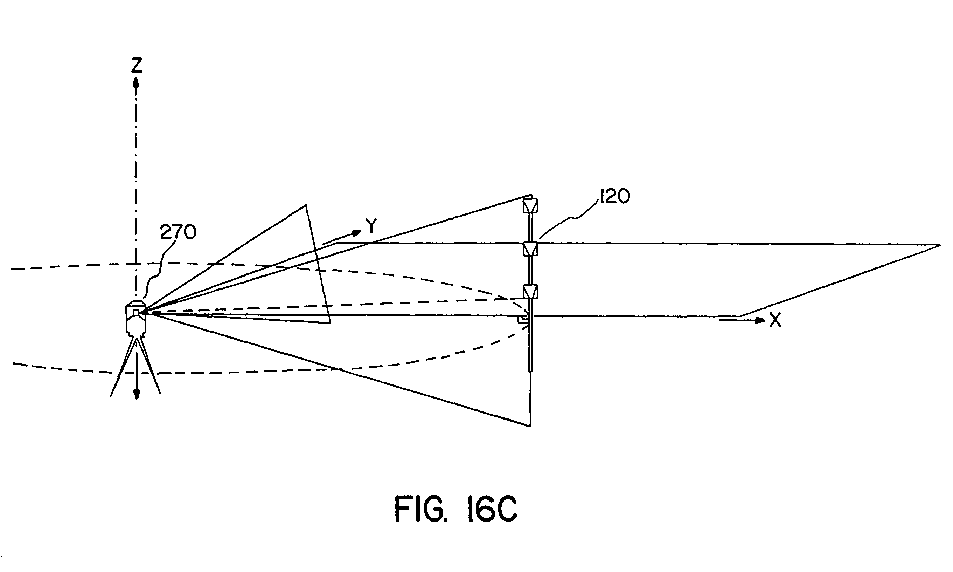

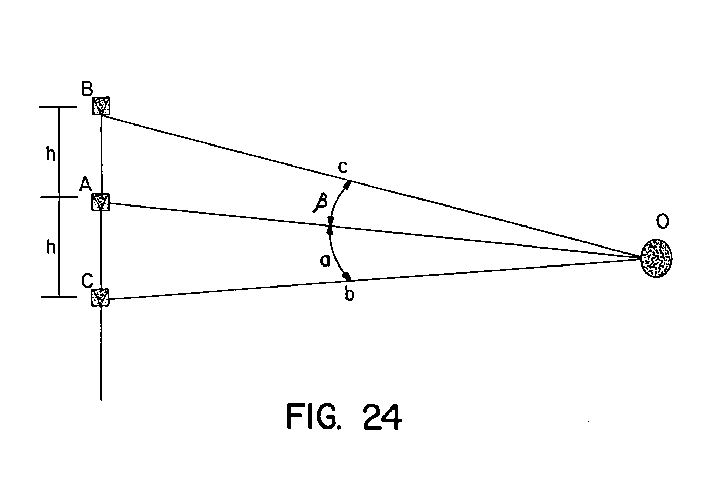

An alternative scheme is illustrated in Figure 16C. This scheme requires only one dual beam station and a portable position sensor to provide three-dimensional position information. The portable position sensor (hereinafter a "base line position sensor") 120 includes three detectors 242, as shown in Figures 22 and 24. The detectors 242 are spaced at some distance, h, apart along the axis of the base line position sensor 120. The three detectors 242 form a base line. The horizontal angle is calculated using Equation 1. The vertical angle to each of the detectors 242 is calculated using Equation 2. Once the vertical angle to each of the detectors 242 is known, the horizontal distance between the base line position sensor 120 and the dual beam station 270 can be determined through a known reverse resection method.

### Figure 26

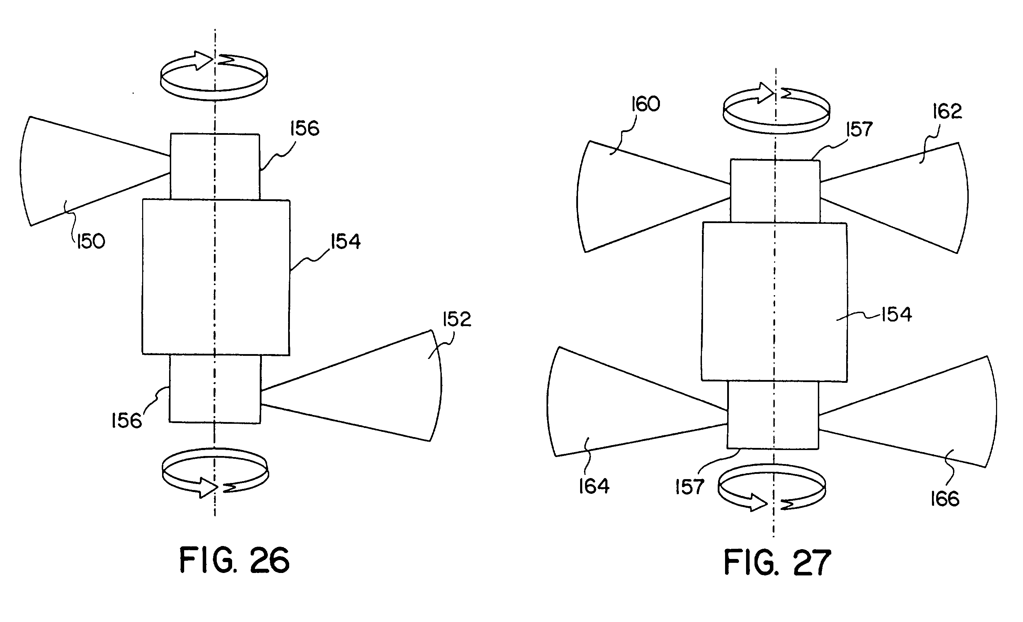

The reflecting stations 210A, 210B, and 210C of Figure 16A can be replaced by a system including two counter-rotating laser beams, as illustrated in Fig. 26. The primary beam 150 is the equivalent of the primary beam 213 of the reflecting stations 210A, 210B, and 210C in Figure 16A. The secondary beam 152 is equivalent to the secondary beam 224 of the reflecting stations in Figure 16A. The primary laser beam 150 and the secondary laser beam 152 are rotated about an axis at a constant angular velocity, but in opposite directions, by separate rotating optical heads 156. The rotating optical heads 156 are rotated by a motor transmission system 154.

### Figure 27

The dual beam station 270 of Figure 16B can be replaced by a system including two pairs of counter-rotating laser beams as illustrated in Fig. 27. Two primary beams 160 and 162 have all of the characteristics of the primary beams 290 and 292 of the dual beam station 270 in Figure 16B. Two secondary beams 164 and 166 have all of the characteristics of the secondary beams 294, 296 of the dual beam station 270 in Figure 16B. Optical rotating heads 157 generate the pairs of laser beams and counter-rotate at a constant angular velocity. The optical rotating heads 157 are rotated by a motor/transmission system 154.

One exemplary application of the present invention involves linking the disclosed positioning system to an electronic model representation for construction lay-out. An electronic database of the design environment can be created by simple graphical techniques or can be generated from a previously generated 2D or 3D CAD design model of the construction site and objects under consideration.

### Figures 9A-9D

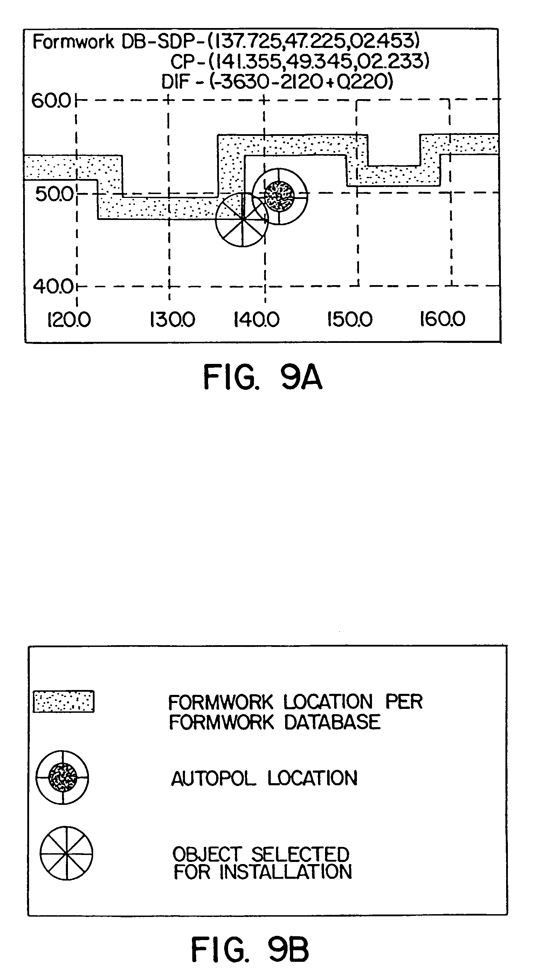

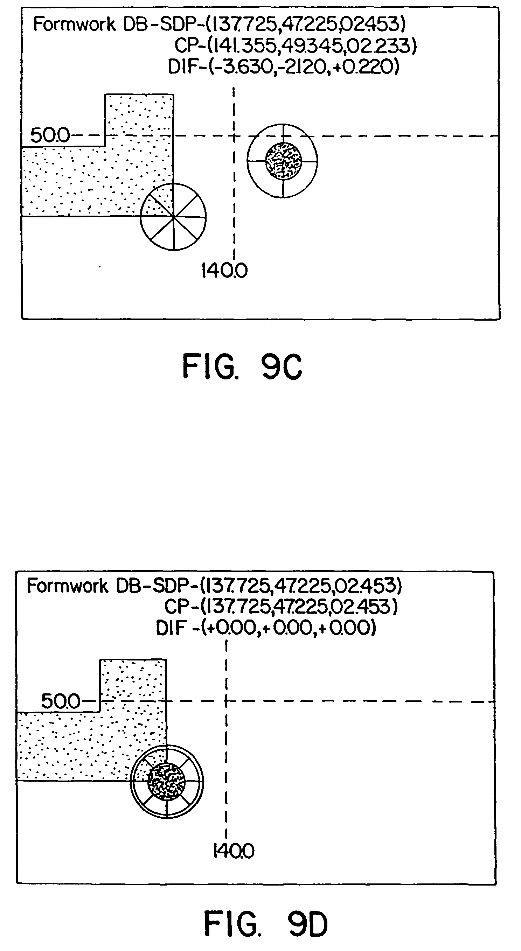

Figures 9A-9D represent various screens of a display 254 (Figure 8) which is being used for construction lay-out. Figure 9B is the legend for Figures 9A, 9C and 9D. In Figure 9A, a plan view of the construction materials to be installed is shown. In this case the construction material is concrete formwork, which is graphically modelled on the screen from a previously developed electronic model representation of its desired position on the work site. A desired position point and the current position point are shown on the display, both graphically within the electronic model representation and with numerical coordinates. Figure 9C illustrates an ability to graphically zoom into the view for accurate graphical positioning. At the same time, the operator can refer to the coordinates of the current position of the portable position sensor 240 which are continuously updated as the portable position sensor 240 is moved toward the desired location. In addition, the difference between the current position of the portable position sensor and the desired position is also displayed and continuously updated. Figure 9D illustrates the screen of the display 254 when the portable position sensor has reached the desired location.

Another application of the present invention is for the positioning of mechanized equipment for earthmoving.

### Figures 10A and 10B

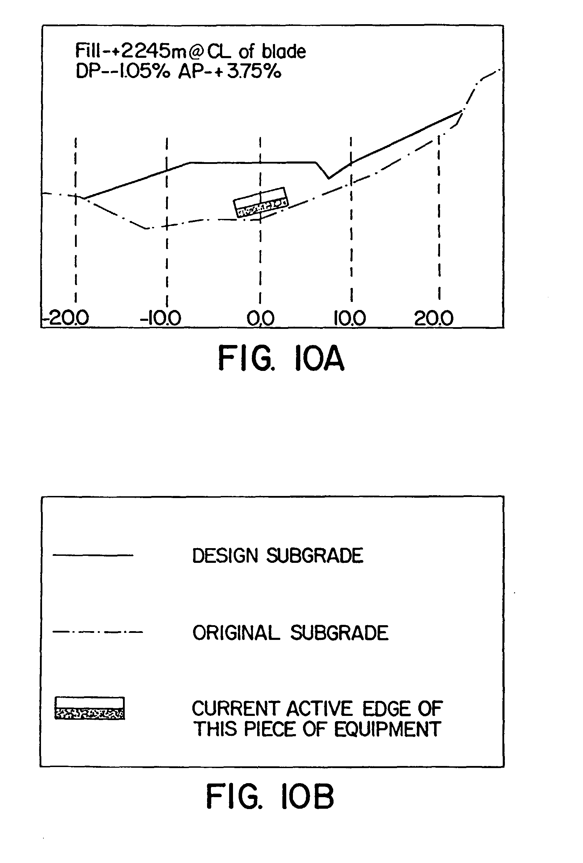

Figures 10A and 10B show the screen of a display 254 showing graphically the current position of the active edge of a piece of equipment located within a graphical database model of the appropriate cross-section of the site. Figure 10B is the legend for Figure 10A. The graphical database model of the cross-section shows both original subgrade and the final design grade which is to be achieved.

### Figures 11A and 11B

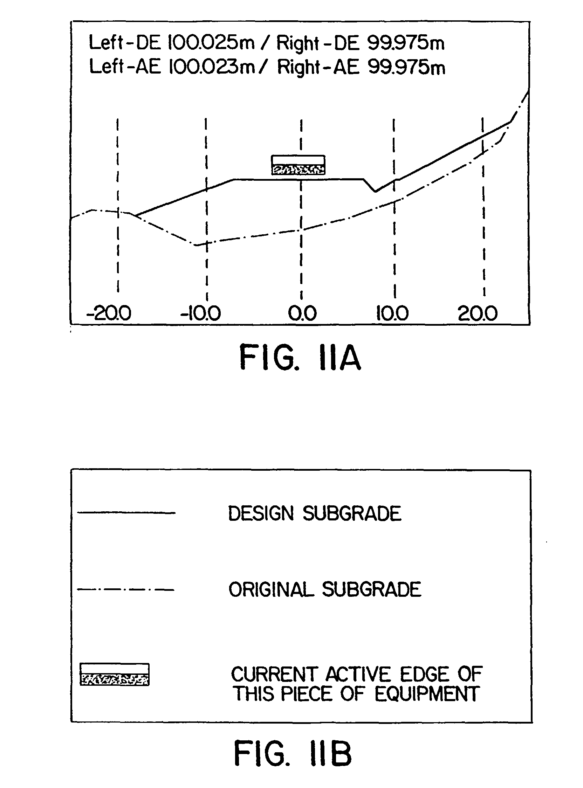

Figures 11A and 11B show the active edge of a paving machine when it has reached the finished design grade. The real-time information provided by the screen of the display 254 shown in Figures 10A and 11A eliminates the need for center line or slope staking. At any time, the operator can determine the amount of fill or cut required at the center line of the blade of the equipment. The design pitch and the actual pitch of the equipment are also provided.

### Figure 12A and 12B

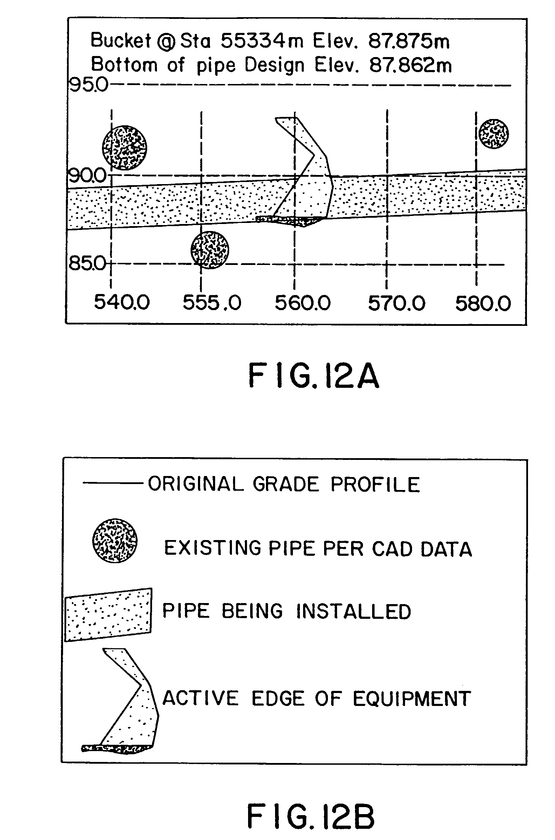

Figure 12A illustrates a screen where hidden obstacles can be graphically displayed via an electronic model representation of the previous installation of the obstacles. Figure 12B is the legend for Figure 12A.

The amount of graphical information which can be simultaneously displayed to the user of the spatial positioning system will be limited only by the ability to graphically present the graphical database information modelling the environment of the portable position sensor 240.

The disclosed positioning system may also be used for monitoring fabrication of components.

### Figure 13

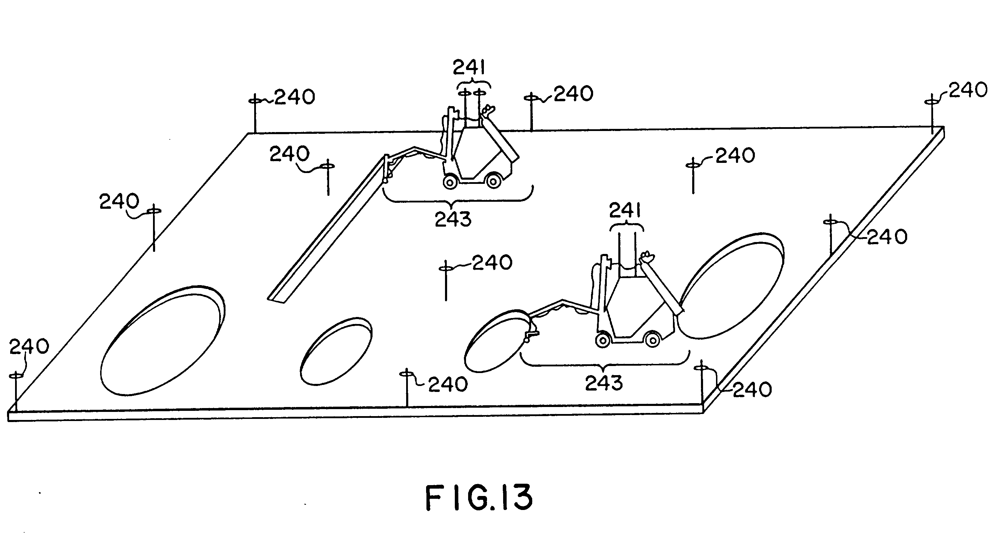

Figure 13 shows the manufacturing of a steel plate. A number of position sensors 240 are located throughout the surface of the steel plate. The orientation of the steel plate is positioned in space from fixed stations (not shown). As cutting operations are performed by the cutting robots 243, any movement in the steel plate is measured and analyzed. These movements are then transferred to a base coordinate system, so that the accuracy of the cutting robots is maintained.

### Figure 14

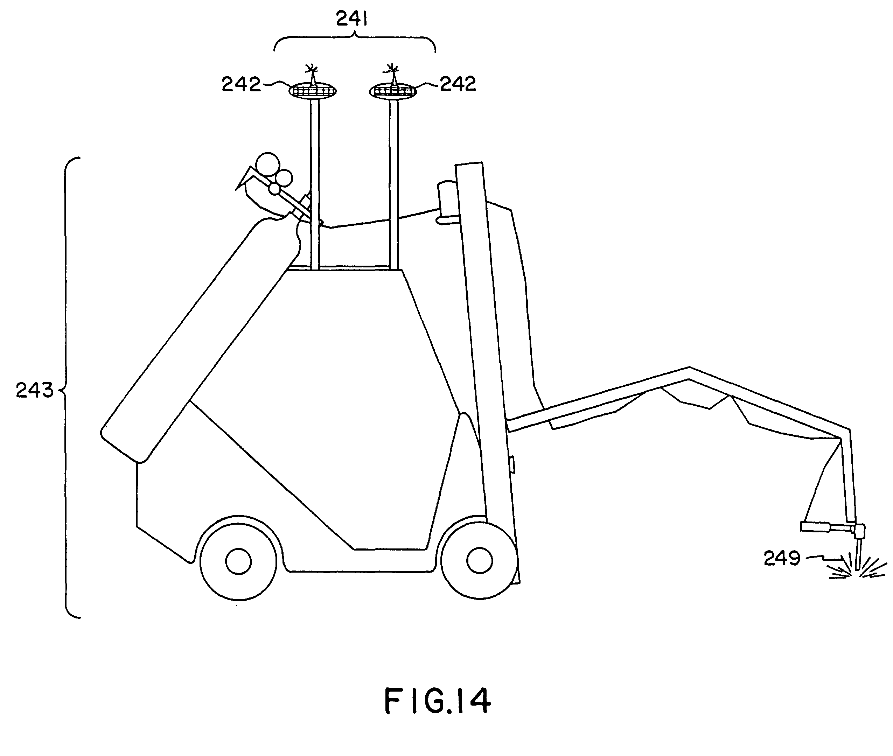

The cutting robot 243 is further shown in Figure 14. The cutting robot is guided by the use of a pair of polygonal detectors 242. This pair of detectors forms a yaw measurement mechanism 241. Through the use of the yaw measurement mechanism, the changes in direction of the robot 243 in the x-y plane can be monitored. The position of the active edge of the equipment 249 (in this case a cutting tool) is determined from measuring the angles and orientation of each movable link in the arm of the cutting robot. The methods of measurement of the movable links are known to those knowledgeable in the art and can be accomplished using one of many methods, including but not limited to, using rotational encoders at each rotational joint. These encoders transmit a degree of rotation to a computer from which the geometric position of the tool can be calculated. The computer would also interpret the yaw information from the yaw measurement mechanism 241.

The data from the joint rotation mechanism and the yaw mechanism would be used to control the movement of the cutting robot, via control mechanisms, known to those knowledgeable in the art. The computing of the yaw measurement mechanism 241, the joint rotation mechanism, and the control of the cutting robots can be accomplished through the use of separately linked computers (not shown) or with a single computer.

### Figure 15

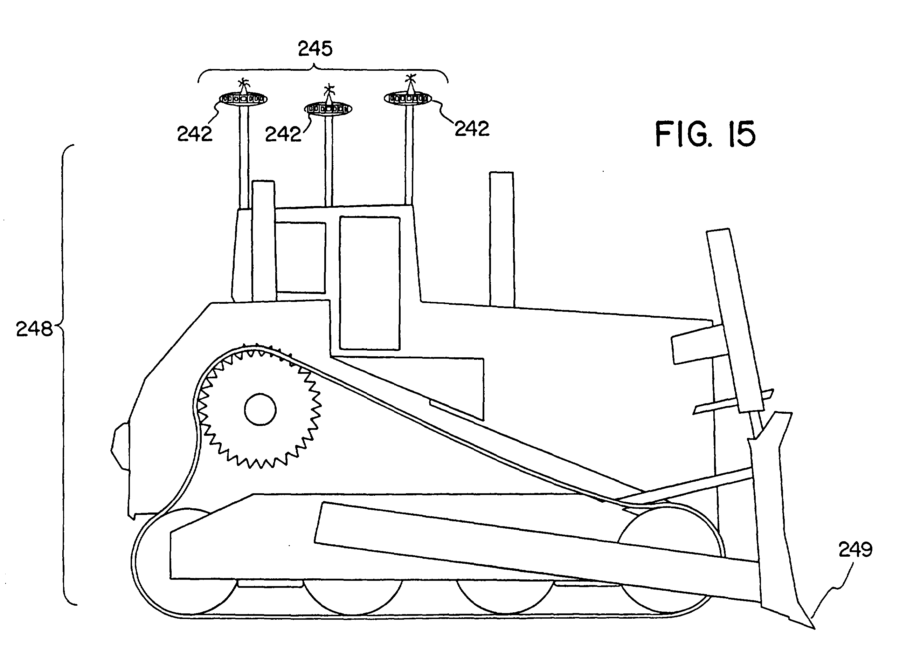

Figure 15 shows a pitch, roll, and yaw measurement mechanism 245 for a bulldozer. The same pitch, roll and yaw measurement mechanism 245 would work for any piece of equipment, autonomous vehicle, or robot that required pitch, roll and yaw control in addition to providing position. The pitch, roll, and yaw measurement mechanism 245 includes three polygonal detectors 242. The three polygonal detectors are positioned on a fixed component of the bulldozer. The relative positions of the three detectors should be in a pattern such that the three detectors form a triangle. A triangular arrangement is preferred, with any orientation acceptable, except an arrangement where the three detectors approach a straight line. The pitch, roll, and yaw measurement mechanism 245 would have a computer (not shown). Measurement of the active edge of the equipment 249 (in this case the bulldozer blade) could be accomplished in a fashion similar to the cutting robot described above, or through measuring the lengths of the hydraulic actuators and arms which control the active edge of the equipment, in a manner known to those knowledgeable in the art.

If the bulldozer is to run autonomously, the guidance of the bulldozer can be effected in a fashion similar to the cutting robot described above. If the bulldozer is to be controlled by an operator, display screens such as those shown in Figure l0A would be provided for the operator to view and thus receive position information. Similar displays could be used for various other applications and for different equipment.

The active edge of the equipment may also be positioned by disposing one or more polygonal detectors on parts that are directly related to the active edge of the equipment. For the cutting robot 243, a single polygonal detector could be placed at a known distance directly above the cutting tool, and consequently, could properly locate the cutting activity. Similarly for the bulldozer 248, two polygonal detectors located at either end of the top of the bulldozer blade can identify the location of the active edge of the equipment. This same configuration could be used for many other pieces of equipment and applications.

Although the equipment controls mentioned above are for above-ground applications in a manufacturing environment and/or in an outdoor environment, the current invention can also be utilized for other applications. The first such application is for parts machining. In parts machining, cutting tool locations can be fixed and the machined part can be moved. A system of polygonal detectors would be placed on the part to be machined. Coordinated indexing of the coordinate system of the machined part to the location of the active machining part would be continuously updated. A second application would be use of a waterproof version of the present invention for underwater location. The primary limitation of underwater use is in the distance which could be covered by the system. Turbidity of the water would significantly affect the overall distance covered by the system. A third application would be in space construction and space docking manoeuvers.

The above description of the invention is for illustrative purposes only and is not intended as a limitation of the present invention, the scope of which is defined solely by the appended claims. It will be appreciated that various modifications may be made, which fall within the scope of the invention as defined by the appended claims.

## Claims

1. A spatial positioning system for determining the instantaneous position of a movable object in a three dimensional Cartesian coordinate system, comprising:
(a) a plurality of fixed referent stations (210A, 210B, 210C, 210D; 210E, 210F, 210G), each said station emitting a rotating laser beam (213; 294, 296, 298) and also emitting a communication pulse when its laser beam crosses a predetermined rotation datum (211), each laser beam (213; 294, 296, 298) being differentiated as to origin from each other laser beam (213; 294, 296, 298);
(b) a sensor (240) mounted on the object, said sensor including:
(i) detector means (242) for detecting said laser beams (213; 294, 296, 298), said detector means (242) emitting a signal indicating detection of a laser beam (213; 294, 296, 298);
(ii) communication pulse receiving means (250, 252) for receiving said communication pulse, said communication pulse receiving means (250, 252) emitting a signal indicating receipt of a communication pulse; and
(c) a determination means (246) for determining the instantaneous position of the object in said three dimensional Cartesian coordinate system based on the signals emitted from said detector means (242) and the signals emitted from said communication pulse receiving means (250, 252), and said determination means (246) further including laser beam identification means for identifying the origin of each laser beam (213; 294, 296, 298) striking the sensor (240);
characterised in that:
(1) each laser beam (213; 294, 296, 298) is divergent; and
(2) at least one laser beam (213; 294, 296, 298) is divergent in a plane which is difference from the plane of divergence of another laser beam (213; 294, 296, 298).

2. A system according to Claim 1, wherein the origin of the laser beams is identified by each of said plurality of fixed referent stations (210A, 210B, 210C, 210D; 210E, 210F, 210G) having at least one of the following features;
(a) rotation at a unique rotation rate,
(b) modulation of the wavelength of the lasers at different rates,
(c) use of lasers of different wavelengths.

3. A system according to Claim 1 or Claim 2, wherein the laser beams (213; 294, 296, 298) are differentiated as to origin by each laser beam (213; 294, 296, 298) rotating at a unique rotation rate and said determination means (246) includes laser beam identification means for establishing a window of time when a laser beam (213; 294, 296, 298) or comnunication pulse from a particular station (210A, 210B, 210C, 210D; 210E, 210F, 210G) of said plurality of fixed referent stations (210A, 210B, 210C, 210D; 210E, 210F, 210G) is expected to arrive, so as to identify the origin of said laser beam (213; 294, 296, 298).

4. A system according to Claim 1 or Claim 2, wherein the laser beams (213; 294, 296, 298) are differentiated as to origin by the wavelength of each laser beam (213; 294, 296, 298) being modulated at a different rate from the rate of modulation of the wavelength of each other laser beam (213; 294, 296, 298).

5. A system according to Claim 1 or Claim 2, wherein the laser beams (213; 294, 296, 298) are differentiated as to origin by each laser beam (213; 294, 296, 298) being of different wavelength from each other laser beam (213; 294, 296, 298).

6. A system according to any preceding claim, comprising three fixed referent stations (210E, 210F, 210G) located in the positions (0, 0, 0), (x_{f}, y_{f}, z_{f}) and (x_{g}, y_{g} z_{g}), respectively; the tilt angles (as measured from the vertical axis) of the laser beams (γₑ, γ_{f}, γ_{g}) being 0°, 60°, and 60°, respectively; and said determination means (246) then determining the position of the portable position sensor (240) by the equations:$\text{x =} \frac{{\text{x}}_{\text{f}} {\text{sin θ}}_{\text{f}} {\text{- x}}_{\text{g}} {\text{sin θ}}_{\text{g}} {\text{- y}}_{\text{f}} {\text{cos θ}}_{\text{f}} {\text{+ y}}_{\text{g}} {\text{cos θ}}_{\text{g}} {\text{- z}}_{\text{f}} {\text{√3 + z}}_{\text{g}} \text{√3}}{{\text{(sin θ}}_{\text{f}} {\text{- sin θ}}_{\text{g}} {\text{) - tan θ}}_{\text{e}} {\text{(cos θ}}_{\text{f}} {\text{- cos θ}}_{\text{g}} \text{)}}$${\text{y = x(tan θ}}_{\text{e}} \text{)}$$\text{z =} \frac{\text{√3}}{\text{3}} {\text{[(x - x}}_{\text{f}} {\text{)sin θ}}_{\text{f}} {\text{- (y - y}}_{\text{f}} {\text{)cos θ}}_{\text{f}} {\text{] + z}}_{\text{f}}$

7. A system according to any of Claims 1 to 5, wherein said plurality of fixed referent stations (210A, 210B, 210C, 210D) includes at least two horizontal fixed referent stations (210A, 210B, 210C) and at least one vertical fixed referent station (210D), each of said horizontal stations (210A, 210B, 210C) emitting a laser beam (213) which is divergent in a vertical plane and is rotated in a horizontal plane, and said at least one vertical station (210D) emitting a laser beam which is divergent in a horizontal plane and is rotated in a vertical plane.

8. A system according to Claim 7, wherein said determination means (246) assigns a time label corresponding to the time that each laser bean (213) and each communication pulse is received, and said determination means (246) then determines the position of the object in tie x-y directions by: (1) calculating a corresponding horizontal angle for each horizontal fixed station (210A, 210B, 210C), said angle being formed between a line connecting the corresponding horizontal fixed station (210A, 210B, 210C) and another horizontal fixed station (210A, 210B, 210C) and a line connecting the corresponding fixed station (210A, 210B, 210C) and said sensor (240), by taking the ratio of the time of detection of a laser beam (213) by the detector means (242) minus the time of receipt of a first communication pulse plus an off-set to the time of receipt of a second communication pulse minus the time of the first communication pulse, multiplied by 360 degrees, and (2) solving the following equations:$\text{x =} \frac{{\text{L * tanφ}}_{\text{b}}}{{\text{tanφ}}_{\text{b}} {\text{- tanφ}}_{\text{a}} \text{,}} \text{y =} \frac{{\text{L * tanφ}}_{\text{a}} {\text{* tanφ}}_{\text{b}}}{{\text{tanφ}}_{\text{b}} {\text{- tanφ}}_{\text{a}}}$

9. A system according to Claim 8, wherein said determination means (246) determines the position of the object in the z-direction by: (1) calculating a corresponding vertical angle for said vertical fixed station (2100), said angle being formed between a vertical plane and a line connecting the vertical fixed station (210D) and said sensor (240), by taking the ratio of the time of detection of a laser beam by the detector means (242) minus the time of receipt of a first communication pulse to the time of receipt of a second communication pulse minus the time of the first communication pulse, multiplied by 360 degrees, and (2) solving the following equation:${\text{z = r * sin(φ}}_{\text{d}} \text{= 90°)}$

10. A system according to any of Claims 1 to 6, wherein each of said plurality of fixed referent stations (210E, 210F, 210G) emits a laser beam (294, 295, 298) which is rotated about a vertical axis and is divergent in a plane which is tilted by a predetermined degree from the vertical axis.

11. A system according to any of Claims 1 to 6, wherein each of said plurality of fixed referent stations (210E, 210F, 210G) emits a divergent laser beam (294, 296, 298) which is rotated about an axis having an attitude distinct from an axis of rotation of each other of said plurality of fixed referent stations (210E, 210F, 210G).

12. A system according to any preceding claim, wherein said detector means (292) comprises a substantially flat circular detector having substantially no minimum vertical height requirement.

13. A system according to any preceding claim, wherein the object (245) is mounted on an autonomous vehicle (248), and design information from a graphical database is input into said determination means (246) to provide guidance based on position matching.

14. A system according to any preceding claim, wherein design information from a graphical database is input into said determination means (246) so that the actual position of said object (240) can be compared to a desired position of said object (240).

15. A system according to claim 1 wherein the position of the object with reference to two of the parameters of the three dimensional Cartesian coordinate system is determined through a trigonometric algorithm using angles determined from time information of at least two rotating laser beams (213; 294, 296, 298) and their corresponding communication pulses, and the position cf the object with reference to the third parameter of the three dimensional Cartesian coordinate system is determined through a trigonometric algorithm using the position of the object with reference to said two of the parameters of the three dimensional Cartesian coordinate system and an angle which is calculated from time information from said at least one laser beam (213; 294, 296, 298) which is divergent in a different plane and its corresponding communication pulse.

## Patentansprüche

1. Räumliches Positionierungssystem zur Bestimmung der momentanen Position eines beweglichen Objekts in einem dreidimensionalen Kartesischen Koordinatensystem, umfassend:
(a) eine Vielzahl von festen Referenzstationen (210A, 210B, 210C, 210D; 210E, 210F, 210G), deren jede einen rotierenden Laserstrahl (213; 294, 296, 298) und auch einen Kommunikationspuls aussendet, wenn ihr Laserstrahl eine vorgegebene Rotations-Zeitmarke (211) kreuzt, wobei jeder Laserstrahl (1213; 294, 296, 298) bezüglich seines Ursprungs von jedem anderen Laserstrahl (213; 294, 296, 298) unterschieden wird;
(b) einen an dem Objekt montierten Sensor (240) mit:
(i) einer Detektoreinrichtung (242) zur Erfassung der Laserstrahlen (213; 294, 296, 298), wobei diese Detektoreinrichtung (242) ein die Erfassung eines Laserstrahls 8213; 294, 296, 298) anzeigendes Signal sendet;
(ii) eine Kommunikationspuls-Empfangseinrichtung (250, 252) für den Empfang des Kommunikationspulses, wobei die Kommunikationspuls-Empfangseinrichtung (250, 252) ein den Empfang eines Kommunikationspulses anzeigendes Signal sendet; und
(c) eine Bestimmungseinrichtung (246) zur Bestimmung der momentanen Position des Objekts in dem dreidimensionalen Kartesischen Koordinatensystem, basierend auf den von der Detektoreinrichtung (242) ausgesandten Signalen und auf den von der Kommunikationspuls-Empfangseinrichtung (250, 252) ausgesandeten Signalen, und wobei die Bestimmungseinrichtung (246) ferner eine Laserstrahl-Identifizierungseinrichtung zur Identifizierung des Ursprungs eines jeden auf den Sensor (240) treffenden Laserstrahls (213; 294, 296, 298) aufweist;
dadurch gekennzeichnet, daß
(1) jeder Laserstrahl (213; 294, 296, 298) divergent ist und daß
(2) zumindest ein Laserstrahl (213; 294, 296, 298) in einer Ebene divergent ist, die sich von der Divergenzebene eines anderen Laserstrahls (213; 294, 296, 298) unterscheidet.

2. System nach Anspruch 1, bei welchem der Ursprung des Laserstrahls durch jede der Vielzahl von festen Referenzstationen (210A, 210B, 210C, 210D; 210E, 210F, 210G) mit einem der folgenden Merkmale identifiziert wird:
(a) Rotation mit einer einmaligen Rotationsrate,
(b) Modulation der Wellenlänge der Laser bei unterschiedlichen Raten,
(c) Verwendung von Lasern unterschiedlicher Wellenlängen.

3. System nach Anspruch 1 oder 2, bei welchem die Laserstrahlen (213; 294, 296, 298) bezüglich ihres Ursprungs dadurch unterschieden werden, daß sich jeder Laserstrahl mit einer einmaligen Rotationsrate dreht, und bei welchem die Bestimmungseinrichtung (246) eine Laserstrahl-Identifizierungseinrichtung aufweist zur Erstellung eines Zeitfensters, wenn die Ankunft eines Laserstrahls (213; 294, 296, 298) oder Kommunikationspulses von einer bestimmten Station (210A, 210B, 210C, 210D; 210E, 210F, 210G) der Vielzahl von festen Referenzstationen (210A, 210B, 210C, 210D; 210E, 210F, 210G) erwartet wird, um so den Ursprung des Laserstrahls (213; 294, 296, 298) zu identifizieren.

4. System nach Anspruch 1 oder 2, bei welchem die Laserstrahlen (213; 294, 296, 298) bezüglich ihres Ursprungs dadurch unterschieden werden, daß die Wellenlänge eines jeden Laserstrahls (213; 294, 296, 298) mit einer Rate moduliert wird, die eine andere ist als die Rate der Modulation eines jeden anderen Laserstrahls (213; 294, 296, 298).

5. System nach Anspruch 1 oder 2, bei welchem die Laserstrahlen (213; 294, 296, 298) bezüglich ihres Ursprungs dadurch unterschieden werden, daß jeder Laserstrahl (213; 294, 296, 298) eine andere Wellenlänge hat als jeder andere Laserstrahl (213; 294, 296, 298).

6. System nach einem der vorhergehenden Ansprüche, umfassend drei feste Referenzstationen (210E, 210F, 210G), die sich jeweils in den Positionen (0, 0, 0), (x_{f}, y_{f}, z_{f}) und (x_{g}, y_{g}, z_{g}) befinden, wobei die Tiltwinkel (gemessen von der verikalen Achse) der Laserstrahlen (γₑ, γ_{f}, γ_{g}) jeweils 0°, 60° und 60° betragen; und wobei die Bestimmungseinrichtung (246) dann die Position des tragbaren Positionsfühlers (240) durch die Gleichungen bestimmt:$\text{x =} \frac{{\text{x}}_{\text{f}} {\text{sin θ}}_{\text{f}} {\text{- x}}_{\text{g}} {\text{sin θ}}_{\text{g}} {\text{- y}}_{\text{f}} {\text{cos θ}}_{\text{f}} {\text{+ y}}_{\text{g}} {\text{cos θ}}_{\text{g}} {\text{- 2}}_{\text{f}} {\text{√3 + z}}_{\text{g}} \text{√3}}{{\text{(sin θ}}_{\text{f}} {\text{- sin θ}}_{\text{g}} {\text{) - tan θ}}_{\text{e}} {\text{(cos θ}}_{\text{f}} {\text{- cos θ}}_{\text{g}} \text{)}}$${\text{x = x(tan θ}}_{\text{c}} \text{)}$$\text{z =} \frac{\text{√3}}{\text{3}} {\text{{(x - x}}_{\text{f}} {\text{)sin θ}}_{\text{f}} {\text{- (y - y}}_{\text{f}} {\text{)cos θ}}_{\text{f}} {\text{} + z}}_{\text{f}}$

7. System nach einem der Ansprüche 1 bis 5, bei welchem die Vielzahl von festen Referenzstationen (210A, 210B, 210C, 210D) zumindest zwei horizontale feste Referenzstationen (210A, 210B, 210C) und zumindest eine vertikale feste Referenzstation (210D) umfaßt, wobei jede der horizontalen Stationen (210A, 210B, 210C) einen Laserstrahl (213) aussendet, der in einer vertikalen Ebene divergent ist und der in einer horizontalen Ebene gedreht wird, und wobei die zumindest eine vertikale Station (210D) einen Laserstrahl aussendet, der in einer horizontalen Ebene divergent ist und in einer vertikalen Ebene gedreht wird.

8. System nach Anspruch 7, bei welchem die Bestimmungseinrichtung (246) ein Zeit-Label entsprechend der Zeit, zu der jeder Laserstrahl (213) und jeder Kommunikationspuls empfangen werden, zuordnet, und bei welchem die Bestimmungseinrichtung (246) dann die Position des Objekts in den x-y-Richtungen bestimmt durch: (1) Berechnen eines entsprechenden horizontalen Winkels für jede horizontale feste Station (210A, 210B, 210C), wobei der Winkel zwischen einer die entsprechende horizontale feste Station (210A, 210B, 210C) und eine weitere horizontale feste Station (210A, 210B, 210C) verbindenden und einer die entsprechende feste Station (210A, 210B, 210C) und den Sensor (240) verbindenden Linie gebildet wird, indem das Zeitverhältnis der Erfassung eines Laserstrahls (213) durch die Detektoreinrichtung (242) minus der Zeit des Empfangs eines ersten Kommunikationspulses plus einer Versetzung gegenüber der Zeit des Empfangs eines zweiten Kommunikationspulses minus der Zeit des ersten Kommunikationspulses mit 360 Grad multipliziert wird, und (2) Lösen der folgenden Gleichungen:$\text{X =} \frac{{\text{L * tan⌀}}_{\text{b}}}{{\text{tan⌀}}_{\text{b}} {\text{- tan⌀}}_{\text{2}} \text{,}} \text{y =} \frac{{\text{L * tan⌀ * tan⌀}}_{\text{b}}}{{\text{tan⌀}}_{\text{b}} {\text{- tan⌀}}_{\text{2}}}$

9. System nach Anspruch 8, bei welchem die Bestimmungseinrichtung (246) die Position des Objekts in der z-Richtung bestimmt durch: (1) Berechnen eines entsprechenden vertikalen Winkels für die vertikale feste Station (210D), wobei dieser Winkel zwischen einer vertikalen Ebene und einer die vertikale feste Station (210D) mit dem Sensor (240) verbindenden Linie gebildet wird, indem das Zeitverhältnis der Erfassung des Laserstrahls durch die Detektoreinrichtung (242) minus der Zeit des Empfangs eines ersten Kommunikationspulses bis zur Zeit des Empfangs eines zweiten Kommunikationspulses minus der Zeit des ersten Kommunkationspulses mit 360 Grad multipliziert wird, und (2) Lösen der folgenden Gleichung:${\text{z = r * sin (⌀}}_{\text{d}} \text{- 90°)}$

10. System nach einem der Ansprüche 1 bis 6, bei welchem jede der Vielzahl von festen Referenzstationen (210E, 210F, 210G) einen Laserstrahl (294, 296, 298) aussendet, der um eine vertikale Achse gedreht wird und der in einer Ebene divergent ist, die um einen vorgegebenen Grad aus der vertikalen Achse geneigt ist.

11. System nach einem der Ansprüche 1 bis 6, bei welchem jede der Vielzahl von festen Referenzstationen (210E, 210F, 210G) einen Laserstrahl (294, 296, 298) aussendet, der um eine Achse gedreht wird, die sich anders als eine Rotationsachse jeder anderen der Vielzahl von festen Referenzstationen (210E, 210F, 210G) verhält.

12. System nach einem der vorhergehenden Ansprüche, bei welchem die Detektoreinrichtung (292) einen im wesentlichen flachen, kreisförmigen Detektor aufweist, der im wesentlichen keine minimale vertikale Höhenanforderung stellt.

13. System nach einem der vorhergehenden Ansprüche, bei welchem das Objekt (245) an einem autonomen Fahrzeug (248) montiert ist und eine Design-Information aus einer grafischen Datenbank in die Bestimmungseinrichtung (246) eingegeben wird, um für eine Führung basierend auf Positionsabgleich zu sorgen.

14. System nach einem der vorhergehenden Ansprüche, bei welchem eine Design-Information aus einer grafischen Datenbank in die Bestimmungseinrichtung (246) eingegeben wird, so daß die tatsächliche Position des Objekts (240) mit der gewünschten Position dieses Objekts (240) verglichen werden kann.

15. System nach Anspruch 1, bei welchem die Position des Objekts mit Bezugnahme auf zwei der Parameter des dreidimensionalen Kartesischen Koordinatensystems durch einen trigonometrischen Algorithmus bestimmt wird unter Verwendung von Winkeln, die aus der Zeitinformation von zumindest zwei rotierenden Laserstrahlen (213; 294, 296, 298) und ihren entsprechenden Kommunikationspulsen bestimmt werden, und bei welchem die Position des Objekts mit Bezugnahme auf den dritten Parameter des dreidimensionalen Kartesischen Koordinatensystems durch einen trigonometrischen Algorithmus unter Verwendung der Position des Objekts mit Bezug auf die genannten zwei der Parameter des dreidimensionalen Kartesischen Koordinatensystems und einem Winkel bestimmt wird, der aus der Zeitinformation dieses zumindest einen Laserstrahls (213; 294, 296, 298), der in einer anderen Ebene divergent ist, und seines entsprechenden Kommunikationspulses berechnet wird.

## Revendications

1. Système de positionnement spatial pour déterminer la position instantanée d'un objet mobile dans un système de coordonnées Cartésiennes tridimensionnel, comportant :
(a) une pluralité de postes de référence fixes (210A, 210B, 210C, 210D ; 210E, 210F, 210G), chaque poste émettant un faisceau laser tournant (213 ; 294, 296, 298) et émettant aussi une impulsion de communication lorsque son faisceau laser recoupe une marque de repérage angulaire prédéterminée (211), chaque faisceau laser (213 ; 294, 296, 298) étant différencié, s'agissant de son origine, de chaque autre faisceau laser (213 ; 294, 296, 298),
(b) un capteur (240) monté sur l'objet, ledit capteur comportant :
(i) des moyens de détection (242) pour détecter lesdits faisceaux laser (213 ; 294, 296, 298), lesdits moyens de détection (242) émettant un signal indiquant la détection d'un faisceau laser (213 ; 294, 296, 298),
(ii) des moyens de réception d'impulsion de communication (250, 252) pour recevoir ladite impulsion de communication, lesdits moyens de réception d'impulsion de communication (250, 252) émettant un signal indiquant la réception d'une impulsion de communication, et
(c) des moyens de détermination (246) pour déterminer la position instantanée de l'objet dans ledit système de coordonnées Cartésiennes tridimensionnel sur la base des signaux émis par lesdits moyens de détection (242) et des signaux émis par lesdits moyens de réception d'impulsion de communication (250, 252), et lesdits moyens de détermination (246) comportant en outre des moyens d'identification de faisceau laser pour identifier l'origine de chaque faisceau laser (213 ; 294, 296, 298) venant frapper le capteur (240),
caractérisé en ce que :
(1) chaque faisceau laser (213 ; 294, 296, 298) est divergent, et
(2) au moins un faisceau laser (213 ; 294, 296, 298) est divergent dans un plan qui est différent du plan de divergence d'un autre faisceau laser (213 ; 294, 296, 298).

2. Système selon la revendication 1, dans lequel l'origine des faisceaux laser est identifiée par chaque poste de ladite pluralité de postes de référence fixes (210A, 210B, 210C, 210D ; 210E, 210F, 210G) ayant au moins l'une des caractéristiques suivantes :
(a) rotation à une vitesse de rotation unique,
(b) modulation de la longueur d'onde des lasers à des fréquences différentes,
(c) utilisation de lasers de longueurs d'ondes différentes.

3. Système selon la revendication 1 ou 2, dans lequel les faisceaux laser (213 ; 294, 296, 298) sont différenciés, s'agissant de leur origine, par le fait que chaque faisceau laser (213 ; 294, 296, 298) tourne à une vitesse de rotation unique et lesdits moyens de détermination (246) comportent des moyens d'identification de faisceau laser pour établir une fenêtre de temps pendant laquelle un faisceau laser (213 ; 294, 296, 298) ou une impulsion de communication en provenance d'un poste particulier (210A, 210B, 210C, 210D ; 210E, 210F, 210G) de ladite pluralité de postes de référence fixes (210A, 210B, 210C, 210D ; 210E, 210F, 210G) est supposée arriver, de manière à identifier l'origine dudit faisceau laser (213 ; 294, 296, 298).

4. Système selon la revendication 1 ou 2, dans lequel les faisceaux laser (213 ; 294, 296, 298) sont différenciés, s'agissant de leur origine, par le fait que la longueur d'onde de chaque faisceau laser (213 ; 294, 296, 298) est modulée à une fréquence différente de la fréquence de modulation de la longueur d'onde de chaque autre faisceau laser (213 ; 294, 296, 298).

5. Système selon la revendication 1 ou 2, dans lequel les faisceaux laser (213 ; 294, 296, 298) sont différenciés, s'agissant de leur origine, par le fait que chaque faisceau laser (213 ; 294, 296, 298) possède une longueur d'onde différente de chaque autre faisceau laser (213 ; 294, 296, 298).

6. Système selon l'une quelconque des revendications précédentes, comportant trois postes de référence fixes (210A, 210F, 210G) situés aux positions (0,0,0), (x_{f},y_{f},z_{f}) et (x_{g},y_{g},z_{g}), respectivement ; les angles d'inclinaison (tels que mesurés par rapport à l'axe vertical) des faisceaux laser (γₑ, γ_{f}, γ_{g}) étant de 0°, 60° et 60°, respectivement ; et
lesdits moyens de détermination (246) déterminant alors la position du capteur de position portable (240) en recourant aux équations :$\text{x =} \frac{{\text{x}}_{\text{f}} {\text{sin θ}}_{\text{f}} {\text{- x}}_{\text{g}} {\text{sin θ}}_{\text{g}} {\text{- y}}_{\text{f}} {\text{cos θ}}_{\text{f}} {\text{+ y}}_{\text{g}} {\text{cos θ}}_{\text{g}} {\text{- z}}_{\text{f}} \sqrt{\text{3}} {\text{+ z}}_{\text{g}} \sqrt{\text{3}}}{{\text{(sin θ}}_{\text{f}} {\text{- sin θ}}_{\text{g}} {\text{) - tan θ}}_{\text{e}} {\text{(cos θ}}_{\text{f}} {\text{- cos θ}}_{\text{g}} \text{)}}$${\text{y = x(tan θ}}_{\text{e}} \text{)}$$\text{z =} \frac{\sqrt{\text{3}}}{\text{3}} {\text{[(x - x}}_{\text{f}} {\text{)sin θ}}_{\text{f}} {\text{- (y - y}}_{\text{f}} {\text{)cos θ}}_{\text{f}} {\text{] + z}}_{\text{f.}}$

7. Système selon l'une quelconque des revendications 1 à 5, dans lequel ladite pluralité de postes de référence fixes (210A, 210B, 210C, 210) comporte au moins deux postes de référence fixes horizontaux (210A, 210B, 210C) et au moins un poste de référence fixe vertical (210D), chacun desdits postes horizontaux (210A, 210B, 210C) émettant un faisceau laser (213) qui est divergent dans un plan vertical et qui tourne dans un plan horizontal, et ledit au moins un poste vertical (210D) émettant un faisceau laser qui est divergent dans un plan horizontal et qui tourne dans un plan vertical.

8. Système selon la revendication 7, dans lequel lesdits moyens de détermination (246) assignent une étiquette de temps correspondant à l'instant où chaque faisceau laser (213) et chaque impulsion de communication est reçu, et lesdits moyens de détermination (246) déterminent alors la position de l'objet dans les directions x-y en : (1) calculant un angle horizontal correspondant pour chaque poste fixe horizontal (210A, 210B, 210C), ledit angle étant formé entre une ligne reliant le poste fixe horizontal (210A, 210B, 210C) correspondant et un autre poste fixe horizontal (210A, 210B, 210C) et une ligne reliant le poste fixe horizontal (210A, 210B, 210C) correspondant et ledit capteur (240), en formant le rapport de l'horaire de détection d'un faisceau laser (213) par les moyens de détection (242) moins l'horaire de réception d'une première impulsion de communication plus un décalage sur l'horaire de réception d'une seconde impulsion de communication moins l'horaire de réception de la première impulsion de communication, multiplié par 360°, et (2) en résolvant les équations suivantes :$\text{x =} \frac{{\text{L * tanφ}}_{\text{b}}}{{\text{tanφ}}_{\text{b}} {\text{- tanφ}}_{\text{a}}} \text{, y =} \frac{{\text{L * tanφ}}_{\text{a}} {\text{* tanφ}}_{\text{b}}}{{\text{tanφ}}_{\text{b}} {\text{- tanφ}}_{\text{a}}} \text{.}$

9. Système selon la revendication 8, dans lequel lesdits moyens de détermination (246) déterminent la position de l'objet dans la direction z en : (1) calculant un angle vertical correspondant pour ledit poste fixe vertical (210D), ledit angle étant formé entre un plan vertical et une ligne reliant le poste fixe verticale (210D) et ledit capteur (240), en formant le rapport de l'horaire de détection d'un faisceau laser par les moyens de détection (242) moins l'horaire de réception d'une première impulsion de communication sur l'horaire de réception d'une seconde impulsion de communication moins l'horaire de la première impulsion de communication, multiplié par 360°, et en (2) résolvant l'équation suivante :${\text{z = r* sin(φ}}_{\text{d}} \text{- 90°).}$

10. Système selon l'une quelconque des revendications 1 à 6, dans lequel chaque poste de ladite pluralité de postes de référence fixes (210E, 210F, 210G) émet un faisceau laser (294, 296, 298) qui tourne autour d'un axe vertical et qui est divergent dans un plan qui est incliné d'un angle prédéterminé par rapport à l'axe vertical.

11. Système selon l'une quelconque des revendications 1 à 6, dans lequel chaque poste de ladite pluralité de postes de référence fixes (210E, 210F, 210G) émet un faisceau laser divergent (294, 296, 298) qui tourne autour d'un axe ayant une attitude distincte d'un axe de rotation de chacun des autres postes de ladite pluralité de postes de référence fixes (210E, 210F, 210G).

12. Système selon l'une quelconque des revendications précédentes, dans lequel lesdits moyens de détection (292) comportent un détecteur circulaire pratiquement plat ne possédant pratiquement aucune spécification minimale en termes de hauteur verticale.

13. Système selon l'une quelconque des revendications précédentes, dans lequel l'objet (245) est monté sur un véhicule autonome (248), et des informations de conception issues d'une base de données graphique sont entrées sur lesdits moyens de détermination (246) pour assurer le guidage sur la base d'une reconnaissance de position.

14. Système selon l'une quelconque des revendications précédentes, dans lequel des informations de conception issues d'une base de données graphique sont entrées sur lesdits moyens de détermination (246) de sorte que la position réelle dudit objet (240) puisse être comparée à une position souhaitée dudit objet (240).

15. Système selon la revendication 1, dans lequel la position de l'objet par rapport à deux des paramètres du système de coordonnées Cartésiennes tridimensionnel est déterminée par un algorithme trigonométrique en utilisant les angles déterminés à partir des informations temporelles d'au moins deux faisceaux laser tournants (213 ; 294, 296, 298) et de leurs impulsions de communication correspondantes, et la position de l'objet par rapport au troisième paramètre du système de coordonnées Cartésiennes tridimensionnel est déterminée par un algorithme trigonométrique en utilisant la position de l'objet par rapport auxdits deux paramètres du système de coordonnées Cartésiennes tridimensionnel et un angle qui est calculé à partir des informations temporelles dudit au moins un faisceau laser (213 ; 294, 296, 298) qui est divergent dans un plan différent et de son impulsion de communication correspondante.
